(19) Europäisches Patentamt
European Patent Office
Office européen des brevets

(11) Publication number: **0 343 863 B1**

(12) **EUROPEAN PATENT SPECIFICATION**

(45) Date of publication of patent specification: **10.08.94**

(51) Int. Cl.[5]: **C08L 23/06**, C08K 5/13, D01F 6/04

(21) Application number: **89305060.9**

(22) Date of filing: **18.05.89**

The file contains technical information submitted after the application was filed and not included in this specification

(54) **Ultra-high-molecular-weight polyolefin composition.**

(30) Priority: **25.05.88 JP 127271/88**
**25.05.88 JP 127272/88**
**25.05.88 JP 127274/88**
**25.05.88 JP 127276/88**
**25.05.88 JP 127277/88**
**25.05.88 JP 127278/88**
**25.05.88 JP 127279/88**
**25.05.88 JP 127280/88**

(43) Date of publication of application:
**29.11.89 Bulletin 89/48**

(45) Publication of the grant of the patent:
**10.08.94 Bulletin 94/32**

(84) Designated Contracting States:
**AT BE CH DE ES FR GB GR IT LI LU NL SE**

(56) References cited:
**EP-A- 0 115 192**
**EP-A- 0 146 704**
**DE-B- 1 554 862**

(73) Proprietor: **MITSUI PETROCHEMICAL INDUSTRIES, LTD.**
**2-5, Kasumigaseki 3-chome**
**Chiyoda-ku**
**Tokyo 100 (JP)**

(72) Inventor: **Sakai, Hideki c/o Mitsui Petrochemical Industries, Ltd.**
**1-2 Waki 6-chome**
**Waki-cho**
**Kuga-gun Yamaguchi (JP)**
Inventor: **Ishiwatari, Kazuo c/o Mitsui Petrochemical Industries, Ltd.**
**1-2 Waki 6-chome**
**Waki-cho**
**Kuga-gun Yamaguchi (JP)**

(74) Representative: **Myerscough, Philip Boyd et al**
**J.A.KEMP & CO.**
**14, South Square**
**Gray's Inn**
**London WC1R 5LX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 343 863 B1

## Description

This invention relates to ultra-high-molecular-weight polyolefin compositions suitable for use in obtaining molded articles having molecular orientation, and more particularly to ultra-high-molecular-weight polyolefin compositions which are suitable for use in making molded articles having molecular orientation and excellent thermal stability during molding and in the long-term.

It is known to obtain molded articles having molecular orientation, high tensile strength and high tensile modulus by molding ultra-high-molecular-weight polyolefins into fibers and tapes and then orienting them. For example, JP-A-15408/1981 discloses a method wherein a dilute solution of ultra-high-molecular-weight polyethylene is spun into a filament and the resulting filament is oriented. JP-A-130313/1984 discloses a method wherein ultra-high-molecular-weight polyethylene is melt-kneaded with wax, the kneaded material is extruded and the extrudate is solidified by cooling and oriented. Further, JP-A-59-187614 discloses a method wherein the above-described melt-kneaded material is extruded and the extrudate is drafted, solidified by cooling and then oriented.

Accordingly, when the ultra-high-molecular-weight polyolefins are molded to prepare molded articles having molecular orientation such as fibers and tapes, it is necessary to carry out an operation comprising spinning a dilute solution of the ultra-high-molecular-weight polyolefin into a filament and then orienting the filament, or an operation comprising melt-kneading a mixture of the ultra-high-molecular-weight polyolefin and a diluent such as wax, extruding the melt-kneaded material, solidifying the extrudate by cooling and then orienting it. However, the ultra-high-molecular-weight polyolefins are so poor in thermal stability during molding that they are deteriorated by heating, for example, when dilute solutions of the ultra-high-molecular-weight polyolefins are held at high-temperature for a long period of time or the solutions are extruded through extruders kept at elevated temperatures in the above operations. Accordingly, the resulting molecular-orientated molded articles are not fully satisfying in respect of tensile strength and tensile modulus.

Further, such ultra-high-molecular-weight polyolefin compositions have such problems that they are poor in heat stability during molding as well as in long-term heat stability and weather resistance.

The present invention is intended to solve such problems associated with the prior art as mentioned above and an object of the invention is to provide ultra-high-molecular-weight polyolefin compositions which are suitable for use in obtaining molded articles having molecular orientation and excellent heat stability during molding as well as long-term heat stability or weather resistance without detriment to tensile strength, tensile modulus, etc. inherent in the ultra-high-molecular-weight polyolefins.

A first ultra-high-molecular-weight polyolefin composition of the invention comprises:

3 to 80% by weight of an ultra-high-molecular-weight polyolefin having an intrinsic viscosity [$\eta$] of 5 to 40 dl/g as measured in decalin at 135 °C;

97 to 20% by weight of a diluent, the weight percentages of ultra-high-molecular-weight polyolefin and diluent being based on their total weight;

0.005 to 5 parts by weight of a phenol stabilizer based on 100 parts by weight of the combined amount of the ultra-high-molecular-weight polyolefin and the diluent; and

0.005 to 5 parts by weight, based on 100 parts by weight of the total amount of the ultra-high-molecular-weight polyolefin and the diluent, of at least one compound selected from an organic phosphite stabilizer, an organic thioether stabilizer, a hindered amine stabilizers and a metal salt of a higher fatty acid.

A second ultra-high-molecular-weight polyolefin composition of the invention comprises:

3 to 80 % by weight of an ultra-high-molecular-weight polyolefin having an intrinsic viscosity [$\eta$] of 5 to 40 dl/g as measured in decalin at 135 °C;

97 to 20 % by weight of a diluent the weight percentages of ultra-high-molecular-weight polyolefin and diluent being based on their total weight; and

0.005 to 5 parts by weight, based on 100 parts by weight of the total amount of the ultra-high-molecular-weight polyolefin and the diluent, of at least one compound selected from an organic phosphite stabilizer and a hindered amine stabilizer containing a 2,6-dimethylpiperidyl group. The second composition preferably also contains 0.005 to 5 parts by weight of a metal salt of a higher fatty acid based on 100 parts by weight of the total amount of the ultra-high-molecular-weight polyolefin and the diluent.

The ultra-high-molecular-material polyolefin compositions of the present invention will be illustrated in more detail below.

Ultra-high-molecular-weight polyolefins

The ultra-high-molecular-weight polyolefins which can be used in the present invention have an intrinsic viscosity [$\eta$] of at least 5 dl/g, preferably 5 to 40 dl/g as measured in decalin solvent at 135 °C. When the intrinsic viscosity [$\eta$] is lower than 5 dl/g, the resulting molded articles having molecular orientation do not sufficient tensile strength, while when the intrinsic viscosity is higher than 40 dl/g, there is a difficulty in molding the compositions to obtain molded articles having molecular orientation.

The ultra-high-molecular-weight polyolefins useful in the present invention include homopolymers or copolymers of $\alpha$-olefins such as ethylene, propylene, 1-butene, 1-pentene, 1-hexene, 1-octene, 1-decene, 1-dodecene, 4-methyl-1-pentene and 3-methyl-1-pentene. Of these ethylene homopolymer or copolymers of a major portion of the ethylene and a minor portion of one or more other $\alpha$-olefins are particularly preferred.

The ultra-high-molecular-weight polyolefin compositions of the present invention contain 3 to 80% by weight of the ultra-high-molecular-weight polyolefin based on the total weight of the ultra-high-molecular-weight polyolefin and the diluent. It is preferred that the ultra-high-molecular-weight polyolefin is used in an amount of 15 to 60% by weight based on the total weight of said polyolefin and said diluent. When the amount of the ultra-high-molecular-weight polyolefin is less than 3% by weight, there is a difficulty in carrying out melt-kneading and the orientability (stretchability) of the molded articles are liable to become poor, while when the amount is more than 80% by weight, the melt viscosity of the compositions becomes so high that the compositions are difficult to be melt-kneaded or melt-molded and surfaces of the resulting molded articles become rough or breakage of filaments when orientating is liable to be caused. Thus, amount outside the range defined above are not preferred.

Diluents

The ultra-high-molecular-weight polyolefin compositions of the present invention contain diluents in addition to said ultra-high-molecular-weight polyolefins.

As the diluent, solvents for the ultra-high-molecular-weight polyolefins or various waxes having compatibility with said ultra-high-molecular-weight polyolefins can be used.

The solvents which can be used as the diluents in the present invention are those having a boiling point of not lower than the melting points of said ultra-high-molecular-weight polyolefins, preferably at least 20 °C higher than the melting points of said ultra-high-molecular-weight polyolefins.

Concrete examples of the solvents include aliphatic hydrocarbon solvents such as n-nonane, n-dodecane, n-undecane, n-tetradecane, n-octadecane, liquid paraffin and kerosine; aromatic hydrocarbon solvents such as xylene, napthalene, tetralin, butylbenzene, p-cymene, cyclohexylbenzene, diethylbenzene, pentylbenzene, dodecylbenzene, bicyclohexyl, decalin, methylnapthalene and ethylnapthalene and hydrogenated derivatives thereof: halogenated hydrocarbon solvents such as 1,1,2,2-tetrachloroethane, pentachloroethane, hexachloroethane, 1,2,3-trichloropropane, dichlorobenzene, 1,2,4-trichlorobenzene and bromobenzene; and mineral oils such as paraffinic process oil, naphthenic process oil and aromatic process oil.

The waxes which can be used as the diluents in the present invention are aliphatic hydrocarbon compounds and derivatives thereof.

As the aliphatic hydrocarbon compounds, paraffin wax which are mainly composed of saturated aliphatic hydrocarbon compounds and have a molecular weight of not higher than 2,000, preferably not higher than 1,000, more preferably not higher than 800 are used. Concretely, the following aliphatic hydrocarbon compounds are used.

N-alkanes having not less than 22 carbon atoms such as docosane, tricosane, tetracosane, triacontane, and mixtures of a major portion of these n-alkanes with lower n-alkanes; paraffin wax obtained from petroleum; medium/low pressure polyethylene wax which are low-molecular polymers obtained by polymerizing ethylene or copolymerizing ethylene with other $\alpha$-olefin; high-pressure polyethylene wax; ethylene copolymer wax; wax obtained by lowering the molecular weight of polyethylene such as medium/low pressure polyethylene or high-pressure polyethylene by thermal degradation; oxidized products of these wax; and maleic acid-modified wax and maleic acid-modified products of said oxidized wax.

As the aliphatic hydrocarbon compound derivatives, there can be used compounds having not less than 8 carbon atoms, preferably 12 to 50 carbon atoms and an molecular weight of 130 to 2,000, preferably 200 to 800 and having one or more functional groups, preferably one or two functional groups, particularly preferably one functional group such as carboxyl group, hydroxyl group, carbamoyl group, ester group, mercapto group or carbonyl group at the terminal of the aliphatic hydrocarbon group (e.g., alkyl group, alkenyl group) thereof or as a side chain on said aliphatic hydrocarbon group, such as fatty acids, aliphatic

alcohols, fatty acid amides, fatty acid esters, aliphatic mercaptans, aliphatic aldehydes, aliphatic ketones. Concretely, the following compounds can be used.

For example, fatty acids such as capric acid, lauric acid, myristic acid, palmitic acid, stearic acid, oleic acid; aliphatic alcohols such as lauryl alcohol, myristyl alcohol, cetyl alcohol, stearyl alcohol; fatty acid amides such as capric amide, lauric amide, palmitic amide, stearic amide; and fatty acid esters such as stearyl acetate are used.

The ultra-high-molecular-weight polyolefin compositions of the present invention contain said diluent in an amount of 97 to 20% by weight based on the total weight of the ultra-high-molecular-weight polyolefin and the diluent. The preferred amount of the diluent is 85 to 40% by weight based on the total weight of the ultra-high-molecular-weight polyolefin and the diluent. When the amount of the diluent is less than 20% by weight, the melt viscosity of the compositions becomes so high that the compositions are difficult to be melt-kneaded or melt-molded and surfaces of the resulting molded articles become rough or breakage of filaments when orientating is liable to be caused, while when the amount is more than 97% by weight, there is a difficulty in carrying out the melt-kneading and the orientability of the molded articles is liable to become poor.

Phenol stabilizers

The ultra-high-molecular-weight polyolefin compositions of the present invention may contain phenol stabilizers.

Any conventional phenol stabilizer can be used without particular limitation. Concrete examples of the phenol compounds are as follows.

2,6-Di-t-butyl-4-methylphenol
2,6-Di-t-butyl-4-ethylphenol
2,6-Dicyclohexyl-4-methylphenol
2,6-Diisopropyl-4-ethylphenol
2,6-Di-t-amyl-4-methylphenol
2,6-Di-t-octyl-4-n-propylphenol
2,6-Dicyclohexyl-4-n-octylphenol
2-Isopropyl-4-methyl-6-t-butylphenol
2-t-Butyl-2-ethyl-6-t-octylphenol
2-Isobutyl-4-ethyl-6-t-hexylphenol
2-Cyclohexyl-4-n-butyl-6-isopropylphenol
dl-α-Tocopherol
t-Butylhydroquinone
2,2'-Methylenebis(4-methyl-6-t-butylphenol)
4,4'-Butylidenebis(3-methyl-6-t-butylphenol)
4,4'-Thiobis(3-methyl-6-t-butylphenol)
2,2′-Thiobis(4-methyl-6-t-butylphenol)
4,4′-Methylenebis(2,6-di-t-butylphenol)
2,2′-Methylenebis[6-(1-methylcyclohexyl)-p-cresol]
2,2′-Ethylidenebis(2,4-di-t-butylphenol)
2,2′-Butylidenebis(2-t-butyl-4-methylphenol)
1,1,3-Tris(2-methyl-4-hydroxy-5-t-butylphenyl)butane
Triethylene glycol-bis[3-(3-t-butyl-5-methyl-4-hydroxyphenyl)propionate]
1,6-Hexanediol-bis[3-(3,5-di-t-butyl-4-hydroxyphenyl)propionate]
2,2-Thiodiethylenebis[3-(3,5-di-t-butyl-4-hydroxyphenyl)propionate]
N,N′-Hexamethylenebis(3,5-di-t-butyl-4-hydroxyhydrocinnamide)
3,5-Di-t-butyl-4-hydroxybenzylphosphonate-diethyl ester
1,3,5-Tris(2,6-dimethyl-3-hydroxy-4-t-butylbenzyl)isocyanurate
1,3,5-Tris[(3,5-di-t-butyl-4-hydroxyphenyl)propionyloxyethyl]isocyanurate
Tris(4-t-butyl-2,6-dimethyl-3-hydroxybenzyl)isocyanurate
2,4-Bis(n-octylthio)-6-(4-hydroxy-3,5-t-butylanilino)-1,3,5-triazine
Tetrakis[methylene-3-(3,5-di-t-butyl-4-hydroxyphenyl)propionate]methane
Bis(3,5-di-t-butyl-4-hydroxybenzylphosphonic acid ethyl ester) calcium
Bis(3,5-di-t-butyl-4-hydroxybenzylphosphonic acid ethyl ester) nickel
Bis[3,3-bis(3-t-4-hydroxyphenyl)butyric acid] glycol ester
N,N′-Bis[3,5-di-t-butyl-4-hydroxyphenyl)propionyl]hydrazine

2,2′-Oxaimidobis[ethyl-3-(3,5-di-t-butyl-4-hydroxyphenyl)propionate]
2,2′-Methylenebis(4-methyl-6-t-butylphenol)terephthalate
1,3,5-Trimethyl-2,4,6-tris(3,5-di-t-butyl-4-hydroxybenzyl)benzene
3,9-Bis[1,1-dimethyl-2-{β-(3-t-butyl-4-hydroxy-5-methylphenyl)propionyloxy}ethyl]-2,4,8,10-tetraoxaspiro[5,5]-undecane
2,2-Bis[4-(2-)3,5-di-t-butyl-4-hydroxyhydrocinnamoyloxy))ethoxyphenyl]propane
Alkyl esters of β-(3,5-di-t-butyl-4-hydroxyphenyl)propionic acid

Of these, the following compounds are preferred.

Triethylene glycol-bis[3-(3-butyl-5-methyl-4-hydroxyphenyl)propionate]
1,6-Hexanediol-bis[3-(3,5-di-t-butyl-4-hydroxyphenyl)propionate]
2,2-Thiodiethylenebis[3-(3,5-di-t-butyl-4-hydroxyphenyl)propionate]
N,N′-Hexamethylenebis(3,5-di-t-butyl-4-hydroxyhydrocinnamide)
3,5-Di-t-butyl-4-hydroxybenzylphosphonate-diethyl ester
1,3,5-Tris(2,6-dimethyl-3-hydroxy-4-t-butylbenzyl)isocyanurate
1,3,5-Tris[(3,5-di-t-butyl-4-hydroxyphenyl)propionyloxyethyl]isocyanurate
Tris(4-t-butyl-2,6-dimethyl-3-hydroxybenzyl)isocyanurate
2,4-Bis(n-octylthio)-6-(4-hydroxy-3,5-di-t-butylanilino)-1,3,5-triazine
Tetrakis[methylene-3-(3,5-di-t-butyl-4-hydroxyphenyl)propionate]methane
Bis(3,5-di-t-butyl-4-hydroxybenzylphosphonic acid ethyl ester) calcium
Bis(3,5-di-t-butyl-4-hydroxybenzylphosphonic acid ethyl ester) nickel
Bis[3,3-bis(3-t-4-hydroxyphenyl)butyric acid] glycol ester
N,N′-Bis[3,5-di-t-butyl-4-hydroxyphenyl)propionyl]hydrazine
2,2′-Oxamidobis[ethyl-3-(3,5-di-t-butyl-4-hydroxyphenyl)propionate]
2,2′-Methylenebis(4-methyl-6-t-butylphenol) terephthalate
1,3,5-Trimethyl-2,4,6-tris(3,5-di-t-butyl-4-hydroxybenzyl)benzene
3,9-Bis[1,1-dimethyl-2{β-[3-t-butyl-4-hydroxy-5-methylphenyl)propionyloxy}ethyl]-2,4,8,10-tetraoxaspiro-[5,5]undecane
2,2-Bis[4-(2-(3,5-di-t-butyl-4-hydroxyhydrocinnamoyloxy))ethoxyphenyl]propane
Alkyl esters of β-(3,5-di-t-butyl-4-hydroxyphenyl)propionic acid

As said alkyl esters of β-(3,5-di-t-butyl-4-hydroxyphenyl)propionic acid, alkyl esters having not more than 18 carbon atoms are particularly preferred.

Of these, particularly preferred compounds are as follows:

Tetrakis[methylene-3-(3,5-di-t-butyl-4-hydroxyphenyl)propionate]methane
Bis(3,5-di-t-butyl-4-hydroxybenzylphosphonic acid ethyl ester) calcium
Bis(3,5-di-t-butyl-4-hydroxybenzylphosphonic acid ethyl ester) nickel
Bis[3,5-bis(4-hydroxy-3-t-butylphenyl)butyric acid] glycol ester
N,N'-Bis[3,5-di-t-butyl-4-hydroxyphenyl)propionyl]-hydrazine
2,2'-Oxamidobis[ethyl-3-(3,5-di-t-butyl-4-hydroxyphenyl)propionate]
2,2'-Methylenebis(4-methyl-6-t-butylphenol)-terephthalate
1,3,5-Trimethyl-2,4,6-tris(3,5-di-t-butyl-4-hydroxybenzyl)benzene
3,9-Bis[1,1-dimethyl-2-{β-(3-t-butyl-4-hydroxy-5-methylphenyl)propionyloxy}ethyl]-2,4,8,10-tetraoxaspiro-[5,5]undecane
1,3,5-Tris[(3,5-di-t-butyl-4-hydroxyphenyl)-propionyloxyethyl] isocyanurate
2,2-Bis[4-(2-(3,5-di-t-butyl-4-hydroxyhydrocin-namoyloxy))ethoxyphenyl]propane

These phenol stabilizers may be used either alone or in a combination of two or more.

The ultra-high-molecular-weight polyolefin compositions of the present invention contain the phenol stabilizers in an amount of 0.005 to 5 parts by weight, preferably 0.01 to 0.5 parts by weight, more preferably 0.05 to 0.2 parts by weight based on 100 parts by weight of the total amount of the ultra-high-molecular-weight polyolefin and the diluent. When the amount of the phenol stabilizer is in the range of 0.005 to 5 parts by weight based on 100 parts by weight of the total amount of the ultra-high-molecular-weight polyolefin and the diluent, an effect of improving heat resistance can be obtained, the cost of the stabilizer is not increased and the properties of the resin such as tensile strength are not lowered.

## Organic phosphite stabilizers

The ultra-high-molecular-weight polyolefin compositions of the present invention may contain organic phosphite stabilizers in addition to the ultra-high-molecular-weight polyolefin and the diluent.

Any of conventional organic phosphite stabilizers can be used without particular limitation. Concretely, the following compounds can be used.

Trioctyl phosphite, trilauryl phosphite, tridecyl phosphite, octyl diphenyl phosphite, tris(2,4-di-t-butylphenyl) phosphite, triphenyl phosphite, tris(butoxyethyl) phosphite, tris(nonylphenyl) phosphite, distearyl pentaerythritol diphosphite, tetra-(tridecyl)-1,1,3-tris(2-methyl-5-t-butyl-4-hydroxyphenyl)-butane diphosphite, tetra($C_{12}$-$C_{14}$ mixed alkyl)-4,4'-isopropylidenediphenyl diphosphite, tetra(tridecyl)-4,4'-butylidenebis(3-methyl-6-t-butylphenol) diphosphite, tris(3,5-di-t-butyl-4-hydroxyphenyl) phosphite, tris(mono-and di-mixed nonylphenyl) phosphite, hydrogenated 4,4'-isopropylidenediphenol polyphosphite, bis(octylphenyl) bis[4,4'-butylidenebis(3-methyl-6-t-butylphenol)].1,6-hexanediol diphosphite, phenyl 4,4'-isopropylidenediphenol pentaerythritol diphosphite, tris[4,4'-isopropylidenebis(2-t-butylphenol)] phosphite, phenyl diisodecyl phosphite, di(nonylphenyl) pentaerythritol diphosphite, tris(1,3-distearoyloxyisopropyl) phosphite, 4,4'-isopropylidenebis(2-t-butylphenol) di(nonylphenyl) phosphite, 9,10-di-hydro-9-oxa-9-oxa-10-phosphaphenanthrene-10-oxide.

Bis(dialkylphenyl) pentaerythritol diphosphite esters can be used in form of spiro type represented by the following formula (1) and cage type represented by the following formula (2). Generally, a mixture of both isomers are used for economical reason, because the mixture of both isomer is produced from conventional methods for manufacturing the phosphite esters.

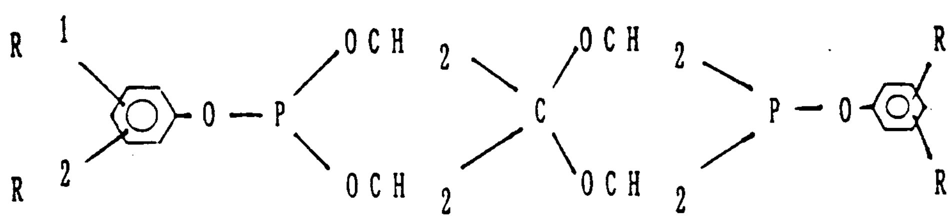
(1)

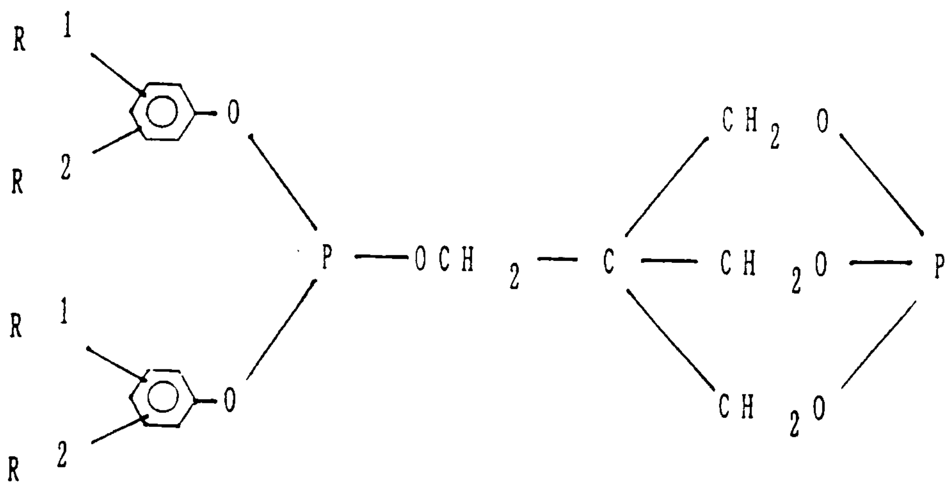
(2)

In the formulas, $R^1$ and $R^2$ are each an alkyl group having 1 to 9 carbon atoms, preferably a branched alkyl group, more preferably tert-butyl group. Preferably, the alkyl groups are attached to 2, 4 or 6 positions of the phenyl group. The phosphite esters suitable for use in the present invention include tris(2,4-di-t-butyl phenyl) phosphite, bis(2,4-di-t-butylphenyl) pentaerylthritol diphosphite and bis(2,6-di-t-butyl-4-methylphenyl) pentaerythritol diphosphite. Further, phosphonites having a structure where carbon atom is directly attached to phosphorus atom, such as tetrakis (2,4-di-t-butylphenyl)-4,4'-biphenylene diphosphonite can also be used.

These organic phosphite stabilizers may be used either along or in a combination.

The ultra-high-molecular-weight polyolefin compositions of the present invention may contain the organic phosphite stabilizers in an amount of 0.005 to 5 parts by weight, preferably 0.01 to 0,5 parts by weight, more preferably 0.05 to 0.2 parts by weight based on 100 parts by weight of the total amount of the ultra-high-molecular-weight polyolefin and the diluent. When the amount of the organic phoshite stabilizer is in the range of 0,005 to 5 parts by weight based on 100 parts by weight of the total amount of the ultra-high

molecular-weight polyolefin and the diluent, an effect of improving heat resistance can be obtained, the cost of the stabilizer is not increased, and there is no fear that the properties of the resin such as strength and elongation are deteriorated.

Organic thioether stabilizers

The ultra-high-molecular-weight polyolefin compositions of the present invention may contain organic thioether stabilizers in addition to the ultra-high-molecular-weight polyolefin and diluent.

Any of organic thioether stabilizers can be used without particular limitation. Concretely, the following compounds can be used.

Dialkyl thiodipropionates such as dilauryl thiodipropionate, dimyristyl thidipropionate and distearyl thiodipropionate; and esters of alkylthiopropionic acids (e.g., butyl-, octyl-, lauryl- or stearylthiopropionic acid) with polyhydric alcohols (e.g., glycerin, trimethylolethane, trimethylolpropane, pentaerythritol, trishydroxyethyl isocyanurate) such as pentaerylthritol tetralauryl thiopropionate and distearyldisulfide. Concrete examples of the organic thioether stabilizers include dilauryl thiodipropionate, dimyristyl thiodipropionate, dilauryl thiodipropionate, lauryl stearyl thiodipropionate and distearyl thiodibutyrate.

These organic thioether stabilizers may be used either alone or in a combination.

The ultra-high-molecular-weight polyolefin compositions of the present invention contain the organic thioether stabilizers in an amount of 0.005 to 5 parts by weight, preferably 0.01 to 0.5 parts by weight, more preferably 0.05 to 0.2 parts by weight based on 100 parts by weight of the total amount of the ultra-high-molecular-weight polyolefin and the diluent. When the amount of the organic thioether stabilizer is in the range of 0.005 to 5 parts by weight of the total amount of the ultra-high-molecular weight polyolefin and the diluent, an effect of improving heat resistance can be obtained, the cost of the stabilizer is not increased and there is no fear that the properties of the resin such as tensile elongation are deteriorated.

Hindered amine stabilizers

The ultra-high-molecular-weight polyolefin compositions of the present invention may contain hindered amine stabilizers in addition to the ultra-high-molecular-weight polyolefin and the diluent.

As the hindered amine stabilizers, there can be used conventional compounds having such a structure that all hydrogen atoms attached to carbon atoms at the positions 2 and 6 of piperidine are substituted by methyl groups.

Concrete examples of the hindered amine stabilizers include the following compounds:

(1) Bis(2,2,6,6-tetramethyl-4-piperidyl)sebacate
(2) Dimethyl succinate-1-(2-hydroxyethyl-4-hydroxy-2,2,6,6-tetramethylpiperdine polycondensate
(3) Poly[[6-(1,1,3,3-tetramethylbutyl)imino-1,3,5-triazine-2,4-diyl][(2,2,6,6-tetramethyl-4-piperdiyl)imino]-hexamethylene[(2,2,6,6-tetramethyl-4-piperidyl)imino]]
(4) Tetrakis(2,2,6,6-tetramethyl-4-piperidyl)-1,2,3,4-butanetetracarboxylate
(5) 2,2,6,6-Tetramethyl-4-piperidyl benzoate
(6) Bis-(1,2,6,6-pentamethyl-4-piperidyl)-2-(3,5-t-butyl-4-hydroxybenzyl)-2-n-butylmalonate
(7) Bis(N-methyl-2,2,6,6-tetramethyl-4-piperidyl) sebacate
(8) 1,1′-(1,2-Ethanediyl)bis(3,3,5,5-tetramethylpiperazinone
(9) Mixed (2,2,6,6-tetramethyl-4-piperidyl/tridecyl)-1,2,3,4-butanetetracarboxylate
(10) (Mixed 1,2,2,6,6-pentamethyl-4-piperidyl/tridecyl)-1,2,3,4-butanetetracarboxylate
(11) Mixed {2,2,6,6-tetramethyl-4-piperidyl/$\beta,\beta,\beta',\beta'$-tetramethyl-3-9-[2,4,8,10-tetraoxasprio(5,5)-undecane]diethyl}1,2,3,4-butanetetracarboxylate
(12) Mixed {1,2,2,6,6-petamethyl-4-piperidyl/$\beta,\beta,\beta',\beta'$-tetramethyl-3-9-[2,4,8,10-tetraoxaspiro(5,5)-undecane]diethyl}-1,2,3,4-butanetetracarboxylate
(13) N,N′-Bis(3-aminopropyl)ethylenediamine-2-4-bis-[N-butyl-N-(1,2,2,6,6-pentamethyl-4-piperidyl)-amino]-6-chloro-1,3,5-triazine condensate
(14) Poly[[6-N-morpholyl-1,3,5-triazine-2,4-diyl][(2,2,6,6-tetramethyl-4-piperidyl)imino]hexamethylene[-(2,2,6,6-tetramethyl-4-piperidyl)imino]].
(15) Condensate of N,N′-bis(2,2,6,6-tetramethyl-4-piperidyl)hexamethylenediamine with 1,2-dibromoethane
(16) [N,(2,2,6,6-tetramethyl-4-piperidyl)-2-methyl-2-(2,2,6,6-tetramethyl-4-piperidyl)imino]propionamide

Among them, the compounds (1), (2), (3), (4), (8), (10), (11), (14) and (15) are preferred.

These hindered amine stabilizers may be used either alone or in a combination.

The ultra-high-molecular-weight polyolefin compositions of the present invention contain the hindered amine stabilizers in an amount of 0.005 to 5 parts by weight, preferably 0.01 to 0.5 parts by weight, more preferably 0.05 to 0.2 parts by weight based on 100 parts by weight of the total amount of the ultra-high-molecular-weight polyolefin and the diluent. When the amount of the hindered amine stabilizer is in the range of 0.005 to 5 parts by weight based on 100 parts by weight of the total amount of the ultra-high-molecular-weight polyolefin and the diluent, an effect of improving heat resistance and weather resistance can be obtained, the cost of the stabilizer is not increased and there is no fear that the properties of the resin such as tensile elongation are deteriorated.

Metal salts of higher fatty acids

The ultra-high-molecular-weight polyolefin compositions of the present invention may contain metal salts of higher fatty acids in addition to the ultra-high-molecular-weight polyolefin and the diluent.

For example, as the metal salts of higher fatty acids there can be used alkaline earth metal salts (e.g., magnesium salts, calcium salts, barium salts), cadmium salts, zinc salts, lead salts and alkali metal salts (e.g., sodium salts, potassium salts, lithium salts) of higher fatty acids such as stearic acid, oleic acid, lauric acid, capric acid, arachidic acid, palmitic acid, behenic acid, 12-hydroxystearic acid, ricinoleic acid, montanic acid.

Concrete examples of the metal salts of the higher fatty acids include magnesium stearate, magnesium laurate, magnesium palmitate, calcium stearate, calcium oleate, calcium laurate, barium stearate, barium oleate, barium laurate, barium arachidate, barium behenate, zinc stearate, zinc laurate, lithium stearate, sodium stearate, sodium palmitate, potassium stearate, potassium laurate, calcium 12-hydroxystearate and calcium montanate.

These metal salts of the higher fatty acids may be used either alone or in a combination.

The ultra-high-molecular-weight polyolefin compositions of the present invention contain the metal salts of the higher fatty acids in an amount of 0.005 to 5 parts by weight, preferably 0.01 to 0.5 parts by weight, more preferably 0.05 to 0.5 parts by weight based on 100 parts by weight of the total amount of the ultra-high-molecular-weight polyolefin and the diluent. When the amount of the metal salt of the higher fatty acid is in the range of 0.005 to 5 parts by weight based on 100 parts by weight of the total amount of the ultra-high-molecular-weight polyolefin and the diluent, the residual chlorine originating from catalyst and left behind in the polymer is sufficiently absorbed, the resin can be prevented from being deteriorated, the cost of the stabilizer is not increased and there is no fear that the properties of the resin such as tensile elongation are deteriorated.

The metal salts of the higher fatty acids function as slip agents and rust inhibitors so that the ultra-high-molecular-weight polyolefin compositions of the present invention are excellent in moldability and are effective in preventing molding machines from being rusted.

Compositions containing the following combinations of components are prefered.

(1) Ultra-high-molecular-weight polyolefin
Diluent
Phenol stabilizer
Metal salt of higher fatty acid

(2) Ultra-high-molecular-weight polyolefin
Diluent
Phenol stabilizer
Organic phosphite stabilizer

(3) Ultra-high-molecular-weight polyolefin
Diluent
Phenol stabilizer
Organic phosphite stabilizer
Metal salt of higher fatty acid

(4) Ultra-high-molecular-weight polyolefin
Diluent
Phenol stabilizer
Organic thioether stabilizer

(5) Ultra-high-molecular-weight polyolefin
Diluent
Phenol stabilizer
Organic thioether stabilizer

Metal salt of higher fatty acid
(6) Ultra-high-molecular-weight polyolefin
Diluent
Phenol stabilizer
Hindered amine stabilizer
(7) Ultra-high-molecular-weight polyolefin
Diluent
Phenol stabilizer
Hindered amine stabilizer
Metal salt of higher fatty acid
(8) Ultra-high-molecular-weight polyolefin
Diluent
Phenol stabilizer
Organic thioether stabilizer
Hindered amine stabilizer
(9) Ultra-high-molecular-weight polyolefin
Diluent
Phenol stabilizer
Organic thioether stabilizer
Hindered amine stabilizer
Metal salt of higher fatty acid
(10) Ultra-high-molecular-weight polyolefin
Diluent
Phenol stabilizer
Organic phosphite stabilizer
Hindered amine stabilizer
(11) Ultra-high-molecular-weight polyolefin
Diluent
Phenol stabilizer
Organic phosphite stabilizer
Hindered amine stabilizer
Metal salt of higher fatty acid
(12) Ultra-high-molecular-weight polyolefin
Diluent
Organic phosphite stabilizer
(13) Ultra-high-molecular-weight polyolefin
Diluent
Organic phosphite stabilizer
Metal salt of higher fatty acid
(14) Ultra-high-molecular-weight polyolefin Diluent
Hindered amine stabilizer containing a 2,6-dimethylpiperidyl group
(15) Ultra-high-molecular-weight polyolefin
Diluent
Hindered amine stabilizer containing a 2,6-dimethylpiperidyl group
Metal salt of higher fatty acid
(16) Ultra-high-molecular-weight polyolefin
Diluent
Organic phosphite stabilizer
Hindered amine stabilizer
(17) Ultra-high-molecular-weight polyolefin
Diluent
Organic phosphite stabilizer
Hindered amine stabilizer
Metal salt of higher fatty acid

In addition to the above-described ingredients, the ultra-high-molecular-weight polyolefin compositions of the present invention may optionally contain conventional additives for polyolefins. For example, an additive such as a heat-proofing stabilizer, weathering stabilizer, pigment, dye, slip agent or antistatic agent, may be added to the compositions, so long as the amount of the additive does not have an adverse effect.

The ultra-high-molecular-weight polyolefin compositions of the present invention have excellent heat stability during molding as well as long-term heat stability, and are scarcely deteriorated by heating when they are molded into molecular orientated articles such as fibers and tapes, so that the compositions are suitable for use in producing molded articles having molecular orientation, which have high tensile strength, high tensile modulus.

Particularly, the ultra-high-molecular-weight polyolefin compositions containing the hindered amine stabilizers as a constituent component are excellent in heat stability during molding as well as in long-term heat stability and weather resistance.

The present invention is further illustrated by means of the following Examples.

Comparative Example 1

0.1 part by weight of tetrakis[methylene-3-(3,5-di-t-butyl-4-hydroxyphenyl)propionate]methane (trade name: IRGANOX 1010, a product of Nippon Ciba-Geigy KK) as the phenolic stabilizer was blended with a mixture of 20 parts by weight of ultra-high-molecular weight polyethylene (having an intrinsic viscosity [$\eta$] of 8.94 dl/g as measured in decalin solvent at 135 °C) powder and 80 parts by weight of paraffin wax (melting point: 69 °C, trade name: Luvax, a product of Nippon Seiro KK) as the diluent. The resulting mixture was melt-spun under the following conditions.

The mixture was fed to a screw extruder (screw diameter: 25 mm, L/D = 25, manufactured by Thermoplastic KK) and melt-kneaded at a temperature of 190 °C. The melt-kneaded material was melt-spun through a spining die having an orifice diameter of 2 mm, said die being fixed to said extruder. The extruder was then taken off under such conditions that air gap was 180 cm and a draft ratio was 35. The extrudate was cooled in air to solidify it, thus obtaining an unoriented fiber.

The unoriented fiber was under the following conditions to obtain a fiber having molecular orientation.

Three pairs of godet rolls were used and two-stage orientation was carried out. The heat transfer medium of the first orientation tank was n-decane and the temperature thereof was 110 °C, and that of the second orientation tank was triethylene glycol and the temperature thereof was 145 °C. The effective length of each tank was 50 cm. In carrying out orientation, the revolution speed of the first godet rolls was 0.5/min and that of the third godet rolls was 12.5/min (draw ratio: 25). The revolution speed of the second godet rolls was carefully chosen so that safety driving could be made. Almost all of the paraffin wax initially mixed with the ultra-high-molecular-weight polyethylene was extracted into n-decane during the course of orientation.

The resulting fiber having molecular orientation was washed with water and dried at room temperature under reduced pressure overnight and the intrinsic viscosity [$\eta$] and tensile characteristics thereof were determined. The measurements were made in the following manners.

Intrinsic viscosity [$\eta$]: Intrinsic viscosity of the resin constituting the fiber having molecular orientation as measured in decalin solvent at 135 °C.

Tensile characteristics: Modulus and tensile strength as tensile characteristics were measured at room temperature (23 °C) by using DCS-50M type tensile testing machine manufactured by Shimazu Seisakusho Ltd. The length of the test sample between clamps was 100 mm and the rate of pulling was 100 mm/min (100% partial strain rate). The modulus was initial modulus and calculated by using the gradient of tangent line. The sectional area of the fiber required for the calculation was determined from its weight and its density which was referred to as 0.960 g/cc.

The results are shown in Table 1.

Example 1

The procedure of Comparative Example 1 was repeated except that 0.1 part by weight of tetrakis-[methylene-3-(3,5-di-t-butyl-4-hydroxyphenyl)propionate]methane (trade name: IRGANOX 1010, a product of Nippon Ciba-Geigy KK) as the phenolic stabilizer was used and further 0.3 parts by weight of calcium stearate (a product of Sankyo Yuki KK) as the metal salt of the higher fatty acid was added. There was obtained a fiber having molecular orientation. The aforementioned measurements were made.

The results are shown in Table 1.

Comparative Example 2

The procedure of Comparative Example 1 was repeated except that 0.2 parts by weight of a 50:50 mixture (trade name: IRGANOX 1425WL, a product of Nippon Ciba-Geigy KK) of bis(3,5-di-t-butyl-4-hydroxybenzylphosphonic acid ethyl ester) calcium and polyethylene wax was used as the phenol stabilizer to obtain a fiber having molecular orientation. The aforementioned measurements were made.

The results are shown in Table 1.

Example 2

The procedure of Comparative Example 1 was repeated except that 0.2 parts by weight of a 50:50 mixture (trade name: IRGANOX 1425WL, a product of Nippon Ciba-Geiby KK) of bis(3,5-di-t-butyl-4-hydroxybenzyl phosphonic acid ethyl ester) calcium and polyethylene wax as the phenol stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 1.

Comparative Example 3

The procedure of Comparative Example 1 was repeated except that 0.1 part by weight of bis[3,5-bis(4-hydroxy-3-t-butylphenyl)butyric acid] glycol ester (Trade name: HOSTANOX 03, a product of Nippon Hoechst KK) as the phenol stabilizer was used to obtain a fiber having molecular orientation. The aforementioned measurements were made.

The results are shown in Table 1.

Example 3

The procedure of Comparative Example 1 was repeated except that 0.1 part by weight of bis[3,5-bis(4-hydroxy-3-t-butylphenyl)butyric acid] glycol ester (trade name: HOSTANOX 03, a product of Nippon Hoechst KK) as the phenol stabilizer was used and further 0.3 parts by weight of calcium stearate (a product of Sankyo Yuki KK) as the metal salt of the higher fatty acid was added. There was obtained a fiber having molecular orientation. The aforementioned measurements were made.

The results are shown in Table 1.

Comparative Example 4

The procedure of Comparative Example 1 was repeated except that 0.1 part by weight of N,N'-bis[3,5-di-t-butyl-4-hydroxyphenyl)propionyl)hydrazine (trade name; IRGANOX MD1024, a product of Nippon Ciba-Geigy KK) as the phenolic stabilizer was used to obtain a fiber having molecular orientation. The aforementioned measurements were made.

The results are shown in Table 1.

Example 4

The procedure of Comparative Example 1 was repeated except that 0.1 part by weight of N,N'-bis[3,5-di-t-butyl-4-hydroxyphenyl)propionyl]hydrazine (trade name: IRGANOX MD1024, a product of Nippon Ciba-Geigy KK) as the phenol stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 1.

Comparative Example 5

The procedure of Comparative Example 1 was repeated except that 0.1 part by weight of 2,2'-oxamidobis[ethyl-3-(3,5-di-t-butyl-4-hydroxyphenyl)propionate] (trade name: NAUGARD XL-1, a product of Uniroyal) was used as the phenol stabilizer to obtain a fiber having molecular orientation. The aforementioned measurements were made.

The results are shown in Table 1.

Example 5

The procedure of Comparative Example 1 was repeated except that 0.1 part by weight of 2,2'-oxamidobis[ethyl-3-(3,5-di-t-butyl-4-hydroxyphenyl)propionate] as the phenol stabilizer was used and further 0.3 parts by weight of calcium stearate (a product of Sankyo Yuki KK) as the metal salt of the higher fatty acid was added. There was obtained a fiber having molecular orientation. The aforementioned measurements were made.

The results are shown in Table 1.

Comparative Example 6

The procedure of Comparative Example 1 was repeated except that the phenol stabilizer was not used to obtain a fiber having molecular orientation. The aforementioned measurements were made.

The results are shown in Table 1.

Table 1

| | Intrinsic viscosity [dl/g] | Tensile modulus [GPa] | Tensile strength [GPa] | Tensile elongation [%] |
|---|---|---|---|---|
| Com. Ex. 1 | 8.14 | 91 | 2.53 | 4.31 |
| Ex. 1 | 8.16 | 90 | 2.54 | 4.33 |
| Com. Ex. 2 | 7.85 | 88 | 2.46 | 4.10 |
| Ex. 2 | 7.91 | 89 | 2.48 | 4.15 |
| Com. Ex. 3 | 8.05 | 89 | 2.48 | 4.25 |
| Ex. 3 | 8.06 | 90 | 2.51 | 4.28 |
| Com Ex. 4 | 8.02 | 90 | 2.50 | 4.28 |
| Ex. 4 | 8.04 | 89 | 2.52 | 4.30 |
| Com. Ex. 5 | 8.15 | 91 | 2.51 | 4.33 |
| Ex. 5 | 8.17 | 90 | 2.53 | 4.35 |
| Com. Ex. 6 | 6.54 | 85 | 2.05 | 2.15 |

It can be understood from Table 1 that the ultra-high-molecular-weight polyethylene compositions of Examples 1 to 5 give fibers having molecular orientation. The intrinsic viscosity of the compositions is hardly reduced by molding and their tensile characteristics are good.

Example 6

0.1 part by weight of tetrakis[methylene-3-(3,5-di-t-butyl-4-hydroxyphenyl) propionate]methane (trade name:IRGANOX 1010, a product of Nippon Ciba-Geigy KK) as the phenol stabilizer and 0.1 part by weight of tris(2,4-di-t-butylphenyl) phosphite (trade name:PHOSPHITE 168, a product of Nippon Ciba-Geigy KK) were blended with a mixture of 20 parts by weight of ultra-high-molecular-weight polyethylene (intrinsic viscosity $[\eta] = 8.94$ dl/g as measured in decalin at 135 °C) and 80 parts by weight of paraffin wax (melting point: 69 °C, trade name:Luvax, a product of Nippon Seiro KK) as the diluent. In the same way as in Example 1, a fiber having molecular orientation was produced from the resulting mixture. Various physical properties were measured as in Comparative Example 1.

The results are shown in Table 2.

Example 7

The procedure of Example 6 was repeated except that 0.1 part by weight of tetrakis[methylene-3-(3,5-di-t-butyl-4-hydroxyphenyl) propionate]methane (trade name: IRGANOX 1010, a product of Nippon Ciba-Geigy KK) as the phenol stabilizer, 0.1 part by weight of tris(2,4-di-t-butylphenyl) phosphite (trade name:PHOSPHITE 168, a product of Nippon Ciba-Geigy KK) as the organic phosphite stabilizer and further 0.3 parts by weight of calcium stearate (a product of Sankyo Yuki KK) were used to obtain a fiber having molecular orientation. The aforementioned measurements were made.

The results are shown in Table 2.

Example 8

The procedure of Example 6 was repeated except that 0.2 parts by weight of a 50:50 mixture (trade name: IRGANOX 1425 WL, a product of Nippon Ciba-Geigy KK) of bis(3,5-di-t-butyl-4-hydroxybenzylphosphonic acid ethyl ester) calcium and polyethylene wax as the phenol stabilizer and 0.1 part by weight of tris(2,4-di-t-butylphenyl) phosphite (trade name: PHOSPHITE 168, a product of Nippon Ciba-Geigy KK) as the organic phosphite stabilizer were used to obtain a fiber having molecular orientation. The aforementioned measurements were made.

The results are shown in Table 2.

Example 9

The procedure of Example 6 was repeated except that 0.2 parts by weight of a 50:50 mixture (trade name: IRGANOX 1425 WL, a product of Nippon Ciba-Geigy KK) of bis(3,5-di-t-butyl-4-hydroxybenzylphosphonic acid ethyl ester) calcium and polyethylene wax as the phenol stabilizer and 0.1 part by weight of tris(2,4-di-t-butylphenyl) phosphite (trade name:PHOSPHITE 168, a product of Nippon Ciba-Geigy KK) as the organic phosphite stabilizer were used and further 0.3 parts by weight of calcium stearate (a product of Sankyo Yuki KK) was added. There was obtained a fiber having molecular orientation. The aforementioned measurements were conducted.

The results are shown in Table 2.

Example 10

The procedure of Example 6 was repeated except that 0.1 part by weight of bis[3,5-dis(4-hydroxy-3-t-butylphenyl)butyric acid] glycol ester (trade name: HOSTANOX 03, a product of Nippon Hoechst KK) as the phenol stabilizer and 0.1 part by weight of bis(2,6-di-t-butyl-4-methylphenyl)pentaerythritol diphosphite (trade name: MARK PEP-36, a product of Adeka Argus Kagaku KK) as the organic phosphite stabilizer were used to obtain a fiber having molecular orientation. The aforementioned measurements were made.

The results are shown in Table 2.

Example 11

The procedure of Example 6 was repeated except that 0.1 part by weight of bis[3,5-bis(4-hydroxy-3-t-butylphenyl)butyric acid] glycol ester (trade name: HOSTANOX 03, a product of Nippon Hoechst KK) as the phenol stabilizer, 0.1 part by weight of bis(2,6-di-t-butyl-4-methylphenyl)pentaerythritol diphosphite (trade name:MARK PEP-36, a product of Adeka Argus Kagaku KK) as the organic phosphite stabilizer and further 0.3 parts by weight of calcium stearate (a product of sankyo Yuki KK) as the metal salt of the higher fatty acid were used to obtain a fiber having molecular orientation. The aforementioned measurements were made.

The results are shown in Table 2.

Example 12

The procedure of Example 6 was repeated except that 0.1 part by weight of N,N'-bis[3,5-di-t-butyl-4-hydroxyphenyl)propionyl]hydrazine (trade name:IRGANOX MD 1024, a product of Nippon Ciba-Geigy KK) as the phenol stabilizer and 0.1 part by weight of bis(2,6-di-t-butyl-4-methylphenyl)pentaerythritol diphosphite (trade name:MARK PEP-36, a product of Adeka Argus Kagaku KK) as the organic phosphite stabilizer were used to obtain a fiber having molecular orientation. The aforementioned measurements were made.

The results are shown in Table 2.

Example 13

The procedure of Example 6 was repeated except that 0.1 part by weight of N,N'-bis[3,5-di-t-butyl-4-hydroxyphenyl)propionyl]hydrazine (trade name:IRGANOX MD 1024, a product of Nippon Ciba-Geigy KK) as the phenolic stabilizer, 0.1 part by weight of bis(2,6-di-t-butyl-4-methylphenyl)pentaerythritol diphosphite (trade name:MARK PEP-36, a product of Adeka Argus KK) as the organic phosphite stabilizer and further 0.3 parts by weight of calcium stearate (a product of Sankyo Yuki KK) as the metal salt of the higher fatty

acid were used to obtain a fiber having molecular orientation.

The results are shown in Table 2.

Example 14

The procedure of Example 6 was repeated except that 0.1 part by weight of 2,2'-oxamidobis[ethyl-3-(3,5-di-t-butyl-4-hydroxyphenyl) propionate] (trade name: NAUGARD XL-1, a product of Uniroyal) and 0.1 part by weight of tetrakis(2,4-di-t-butylphenyl)-4,4'-biphenylenediphenyl phosphonite (trade name: SANDOSTAB P-EPQ, a product of Sandoz Ltd.) as the organic phosphite stabilizer were used to obtain a fiber having molecular orientation. The aforementioned measurements were made.

The results are shown in Table 2.

Example 15

The procedure of Example 6 was repeated except that 0.1 part by weight of 2,2'-oxamidobis[ethyl-3-(3,5-t-butyl-4-hydroxyphenyl)propionate] (trade name:NAUGARD XL-1, a product of Uniroyal) as the phenol stabilizer, 0.1 part by weight of tetrakis(2,4-di-t-butylphenyl)-4,4'-biphenylene-diphenyl phosphonite (trade name: SANDOSTAB P-EPQ, a product of Sandoz Ltd.) as the organic phosphite stabilizer and further 0.3 parts by weight of calcium stearate (a product of Sankyo Yuki KK) as the metal salt of the higher fatty acid were used to obtain a fiber having molecular orientation. The aforementioned measurements were conducted.

The results are shown in Table 2. The test results of Comparative Example 6 are also shown in Table 2 for the purpose of comparison.

Table 2

| Example | Intrinsic viscosity [dl/g] | Tensile modulus [GPa] | Tensile strength [GPa] | Tensile elongation [%] |
|---|---|---|---|---|
| 6 | 8.33 | 90 | 2.53 | 4.32 |
| 7 | 8.35 | 90 | 2.54 | 4.32 |
| 8 | 8.28 | 89 | 2.51 | 4.32 |
| 9 | 8.30 | 91 | 2.52 | 4.35 |
| 10 | 8.31 | 89 | 2.53 | 4.28 |
| 11 | 8.33 | 88 | 2.55 | 4.31 |
| 12 | 8.26 | 89 | 2.48 | 4.31 |
| 13 | 8.28 | 90 | 2.49 | 4.33 |
| 14 | 8.30 | 89 | 2.48 | 4.29 |
| 15 | 8.31 | 88 | 2.50 | 4.30 |
| Com. Ex. 6 | 6.54 | 85 | 2.05 | 2.15 |

It can be understood from Table 2 that the ultra-high-molecular-weight polyethylene compositions containing the above-mentioned stabilizers give fibers having molecular orientation, which scarcely cause lowering in intrinsic viscosity due to molding and have good tensile characteristics.

Example 16

0.1 part by weight of tetrakis[methylene-3-(3,5-di-t-butyl-4-hydroxyphenyl) propionate]methane (trade name: IRGANOX 1010, a product of Nippon Ciba-Geigy) as the phenol stabilizer and 0.1 part by weight of dilauryl thiodipropionate (trade name: Antiox L, a product of Nippon Oils & Fats Co., Ltd.) as the organic thioether stabilizer were blended with a mixture of 20 parts by weight of ultra-high-molecular-weight polyethylene (intrinsic viscosity $[\eta] = 8.94$ dl/g as measured in decalin at 135 ° C) powder and 80 parts by weight of paraffin wax (melting point: 69 ° C, trade name:Luvax, a product of Nippon Seiro KK) as the diluent. In the same as in Comparative Example 1, a fiber having molecular orientation was produced from the resulting mixture. Various physical properties were measured.

The results are shown in Table 3.

Example 17

The procedure of Example 16 was repeated except that 0.1 part by weight of tetrakis[methylene-3-(3,5-di-t-butyl-4-hydroxyphenyl) propionate]methane (trade name: IRGANOX 1010, a product of Nippon Ciba-Geigy) as the phenol stabilizer, 0.1 part by weight of dilauryl thiodipropionate(trade name:Antiox L, a product of Nippon Oils & Fats Co., Ltd.) as the organic thioether stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 3.

Example 18

The procedure of Example 16 was repeated except that 0.2 parts by weight of a 50:50 mixture (trade name: IRGANOX 1425 WL, a product of Nippon Ciba-Geigy) of bis(3,5-di-t-butyl-4-hydroxybenzylphosphonic acid ethyl ester) calcium and polyethylene wax as the phenol stabilizer and 0.1 part by weight of distearyl thiodipropionate (trade name:DSTP(YOSHITOMI), a product of Yoshitomi pharmaceutical Industries, Ltd.) as the organic thioether stabilizer were used to obtain a fiber having molecular orientation. The aforementioned measurements were made.

The results are shown in Table 3.

Example 19

The procedure of Example 16 was repeated except that 0.2 parts by weight of a 50:50 mixture (trade name: IRGANOX 1425 WL, a product of Nippon Ciba-Geigy) of bis(3,5-di-t-butyl-4-hydroxybenzylphosphonic acid ethyl ester) calcium and polyethylene wax as the phenol stabilizer, 0.1 part by weight of distearyl thiodipropionate (trade name: DSTP(YOSHITOMI), a product of Yoshitomi Pharmaceutical Industries, Ltd.) as the organic thioether stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 3.

Example 20

The procedure of Example 16 was repeated except that 0.1 part by weight of bis[3,5-bis(4-hydroxy-3-t-butylphenyl)butyric acid]glycol ester (trade name:HOSTANOX 03, a product of Nippon Hoechst KK) as the phenol stabilizer and 0.1 part by weight of lauryl stearyl thiodipropionate (trade name: LSTP(YOSHITOMI), a product of Yoshitomi pharmaceutical Industries, Ltd.) as the organic thioether stabilizer were used to obtain a fiber having molecular orientation. The aforementioned measurements were made.

The results are shown in Table 3.

Example 21

The procedure of Example 16 was repeated except that 0.1 part by weight of bis[3,5-bis(4-hydroxy-3-t-butylphenyl)butyric acid] glycol ester (trade name: HOSTANOX 03, a product of Nippon Hochst KK) as the phenol stabilizer, 0.1 part by weight of lauryl stearyl thiodipropionate (trade name:LSTP(YOSHITOMI), a product of Yoshitomi Pharmaceutical Industries, Ltd.) as the organic thioether stabilizer and 0.3 parts by weight of calcium stearate (a product of Sankyo Yuki KK) as the metal salt of the higher fatty acid were used to obtain a fiber having molecular orientation. The aforementioned measurements were made.

The results are shown in Table 3.

Example 22

The procedure of Example 16 was repeated except that 0.1 part by weight of tetrakis[methylene-3-(3,5-di-t-butyl-4-hydroxyphenyl)propionate]methane (trade name: IRGANOX 1010, a product of Nippon Ciba-Geigy KK) as the phenol stabilizer and 0.1 part by weight of pentaerythrityl-tetra-$\beta$-mercaptolauryl propionate (trade name:Seenox 412S, a product of Shipuro Kasei KK) as the organic thioether stabilizer were used to obtain a fiber having molecular orientation. The aforementioned measurements were made.

The results are shown in Table 3.

Example 23

The procedure of Example 16 was repeated except that 0.1 part by weight of tetrakis[methylene-3-(3,5-t-butyl-4-hydroxyphenyl)propionate]methane (trade name: IRGANOX 1010, a product of Nippon Ciba-Geigy) as the phenol stabilizer, 0.1 part by weight of pentaerythrityl-tetra-$\beta$-mercaptolauryl propionate (trade name:Seenox 412S, a product of Shipuro Kasei KK) as the organic thioether stabilizer and further 0.3 parts by weight of calcium stearate (a product of Sankyo Yuki KK) as the metal salt of the higher fatty acid were used to obtain a fiber having molecular orientation. The aforementioned measurements were conducted.

The results are shown in Table 3.

Example 24

The procedure of Example 16 was repeated except that 0.1 part by weight of 2,2'-oxamidobis[ethyl-3-(3,5-di-t-butyl-4-hydroxyphenyl)propionate] (trade name:NAUGARD XL-1, a product of Uniroyal) as the phenol stabilizer and 0.1 part by weight of distearyl thiodipropionate (trade name: DSTP(YOSHITOMI), a product of Yoshitomi Pharmaceutical Industries Ltd.) as the organic thioether stabilizer were used to obtain a fiber having molecular orientation. The aforementioned measurements were made.

The results are shown in Table 3.

Example 25

The procedure of Example 16 was repeated except that 0.1 part by weight of 2,2'-oxamido[ethyl-3-(3,5-di-t-butyl-4-hydroxyphenyl)propionate] (trade name:NAUGARD XL-1, a product of Uniroyal) as the phenol stabilizer, 0.1 part by weight of distearyl thiodipropionate (trade name: DSTP(YOSHITOMI), a product of Yoshitomi Pharmaceutical Industries Ltd.) as the organic thioether stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 3. The results of Comparative Example 6 are also shown in Table 3 for the purpose comparison.

Table 3

| Example | Intrinsic viscosity [dl/g] | Tensile modulus [GPa] | Tensile strength [GPa] | Tensile elongation [%] |
|---|---|---|---|---|
| 16 | 8.28 | 91 | 2.48 | 4.33 |
| 17 | 8.30 | 90 | 2.51 | 4.35 |
| 18 | 8.31 | 92 | 2.50 | 4.26 |
| 19 | 8.32 | 91 | 2.52 | 4.28 |
| 20 | 8.29 | 90 | 2.52 | 4.27 |
| 21 | 8.29 | 92 | 2.53 | 4.29 |
| 22 | 8.31 | 90 | 2.47 | 4.35 |
| 23 | 8.33 | 91 | 2.49 | 4.38 |
| 24 | 8.29 | 89 | 2.46 | 4.28 |
| 25 | 8.31 | 89 | 2.48 | 4.30 |
| Com. Ex. 6 | 6.54 | 85 | 2.05 | 2.15 |

It can be understood from Table 3 that the ultra-high-molecular-weight polyethylene compositions containing the above-mentioned stabitizers give fibers having molecular orientation, which scarcely cause lowering in intrinsic viscosity [$\eta$] due to molding and have good tensile characteristics.

Example 26

0.1 part by weight of tetrakis[methylene-3-(3,5-di-t-butyl-4-hydroxyphenyl) propionate]methane (trade name: IRGANOX 1010, a product of Nippon Ciba-Geigy KK) as the phenol stabilizer and 0.1 part by weight of bis(2,2,6,6-tetramethyl-4-piperidyl) sebacate (trade name: SANOL 770, a product of Sankyo Co., Ltd.) as the hindered amine stabilizer were blended with a mixture of 20 parts by weight of ultra-high-molecular-weight polyethylene (intrinsic viscosity [η] = 8.94 dl/g as measured in decalin at 135 °C) powder and 80 parts by weight of paraffin wax (melting point: 69 °C, trade name:Luvax, a product of Nippon Seiro KK) as the diluent. In the same way as in Comparative Example 1, a fiber having molecular orientation was produced from the resulting mixture. Various physical properties were measured.

The results are shown in Table 4.

Example 27

The procedure of Example 26 was repeated except that 0.1 part by weight of tetrakis[methylene-3-(3,5-t-butyl-4-hydroxyphenyl)propionate]methane (trade name: IRGANOX 1010, a product of Nippon Ciba-Geigy KK) as the phenol stabilizer, 0.1 part by weight of bis(2,2,6,6-tetramethyl-4-piperidyl)sebacate (trade name:SANOL 770, a product of Sankyo Co., Ltd.) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 4.

Example 28

The procedure of Example 26 was repeated except that 0.2 parts by weight of a 50:50 mixture (trade name: IRGANOX 1425WL, a product of Nippon Ciba-Geigy KK) of bis(3,5-di-t-butyl-4-hydroxybenzylphosphonic acid ethyl ester) calcium and polyethylene wax as the phenol stabilizer and 0.1 part by weight of dimethyl succinate-1-(2-hydroxyethyl)-4-hydroxy-2,2,6,6-tetramethyl-piperidine polycondensate (trade name: Chimassorb 622LD, a product of Nippon Ciba-Geigy KK) as the hindered amine stabilizer were used to obtain a fiber having molecular orientation. The aforementioned measurements were made.

The results are shown in Table 4.

Example 29

The procedure of Example 26 was repeated except that 0.2 parts by weight of a 50:50 mixture (trade name: IRGANOX 1425 WL, a product of Nippon Ciba-Geigy KK) of bis(3,5-di-t-butyl-4-hydroxybenzylphosphonic acid ethyl ester) calcium and polyethylene wax as the phenol stabilizer, 0.1 part by weight of dimethyl succinate-1-(2-hydroxyethyl)-4-hydroxy-2,2,6,6-tetramethylpiperidine polycondensate (trade name: Chimassorb 622LD, manufactured by Nippon Ciba-Geigy KK) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 4.

Example 30

The procedure of Example 26 was repeated except that 0.1 part by weight of bis[3,5-bis(4-hydroxy-3-t-butylphenyl)butyric acid] glycol ester (trade name: HOSTANOX 03, a product of Nippon Hoechst KK) as the phenol stabilizer and 0.1 part by weight of poly[[6-(1,1,3,3,-tetramethylbutyl)-imino-1,3,5-triazine-2-4-diyl][-(2,2,6,6-tetramethyl-4-piperidyl)imino] hexamethylene[(2,2,6,6-tetramethyl-4-piperidyl)imino]] (trade name: Chimassorb 944LD, a product of Nippon Ciba-Geigy KK) as the hindered amine stabilizer were used to obtain a fiber having molecular orientation. The aforementioned measurements were made.

The results are shown in Table 4.

Example 31

The procedure of Example 26 was repeated exept that 0.1 part by weight of bis [3,5-bis(4-hydroxy-3-t-butylphenyl)butyric acid] glycol ester (trade name: HOSTANOX 03, a product of Nippon Hoechst KK) as the phenol stabilizer, 0.1 part by weight of poly[[6-(1,1,3,3-tetramethylbutyl)-imino-1,3,5-triazine-2-4-diyl][-(2,2,6,6-tetramethyl-4-piperidyl)imino] hexamethylene[(2,2,6,6-tetramethyl-4-piperidyl)imino]] (trade name: Chimassorb 944LD, a product of Nippon Ciba-Geigy KK) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 4.

Example 32

The procedure of Example 26 was repeated except that 0.1 part by weight of N,N'-bis[(3,5-di-t-butyl-4-hydroxyphenyl) propionyl] hydrazine (trade name: IRGANOX MD1024, a product of Nippon Ciba-Geigy KK) as the phenol stabilizer and 0.1 part by weight of tetrakis(2,2,6,6-tetramethyl-4-piperidyl)-1,2,3,4-butanetetracarboxylate (trade name:MARK LA-57, a product of Adeka Argus Kagaku KK) as the hindered amine stabilizer were used to obtain a fiber having molecular orientation. The aforementioned measurements were made.

The results are shown in Table 4.

Example 33

The procedure of Example 26 was repeated except that 0.1 part by weight of N,N'-bis [3,5-di-t-butyl-4-hydroxyphenyl)propionyl] hydrazine (trade name: IRGANOX MD1024, a product of Nippon Ciba-Geigy KK) as the phenol stabilizer, 0.1 part by weight of tetrakis(2,2,6,6-tetramethyl-4-piperidyl)-1,2,3,4-butanetetracarboxylate (trade name: MARK LA-57, a product of Adeka Argus Kagaku KK) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 4.

Example 34

The procedure of Example 26 was repeated except that 0.1 part by weight of tetrakis[methylene-3-(3,5-di-t-butyl-4-hydroxyphenyl)propionate]methane (trade name: IRGANOX 1010, a product of Nippon Ciba-Geigy KK) as the phenol stabilizer and 0.1 part by weight of dimethyl succinate -1- (2-hydroxyethyl)-4-hydroxy-2,2,6,6-tetramethylpiperidine polycondensate (trade name: Chimassorb 622LD, a product of Nippon Ciba-Geigy KK) as the hindered amine stabilizer were used to obtain a fiber having molecular orientation. The aforementioned measurements were made.

The results are shown in Table 4.

Example 35

The procedure of Example 26 was repeated except that 0.1 part by weight of tetrakis[methylene-3-(3,5-di-t-butyl-4-hydroxyphenyl)propionate] methane (trade name: IRGANOX 1010, a product of Nippon Ciba-Geigy KK) as the phenol stabilizer, 0.1 part by weight of dimethyl succinate-1-(2-hydroxyethyl)-4-hydroxy-2,2,6,6-tetramethylpiperidine polycondensate (trade name: Chimassorb 622LD, a product of Nippon Ciba-Geigy KK) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 4. The results of Comparative Example 6 are also shown in Table 4 for the purpose of comparison.

Table 4

| Example | Intrinsic viscosity [dl/g] | Tensile modulus [GPa] | Tensile strength [GPa] | Tensile elongation [%] |
|---|---|---|---|---|
| 26 | 8.21 | 89 | 2.49 | 4.23 |
| 27 | 8.24 | 90 | 2.50 | 4.25 |
| 28 | 8.19 | 90 | 2.46 | 4.29 |
| 29 | 8.20 | 91 | 2.48 | 4.31 |
| 30 | 8.20 | 90 | 2.47 | 4.26 |
| 31 | 8.22 | 89 | 2.49 | 4.28 |
| 32 | 8.23 | 88 | 2.50 | 4.28 |
| 33 | 8.25 | 89 | 2.51 | 4.30 |
| 34 | 8.22 | 90 | 2.45 | 4.23 |
| 35 | 8.24 | 91 | 2.46 | 4.25 |
| Com. Ex. 6 | 6.54 | 85 | 2.05 | 2.15 |

It can be understood from Table 4 that the ultra-high-molecular-weight polyethylene compositions containing the above-mentioned stabilizers give fibers having molecular orientation, which scarcely cause lowering in intrinsic viscosity [$\eta$] due to molding and have good tensile characteristics.

Example 36

0.1 part by weight of tetrakis [methylene-3-(3,5-di-t-butyl-t-hydroxyphenyl) propionate]methane (trade name: IRGANOX 1010, a product of Nippon Ciba-Geigy KK) as the phenol stabilizer, 0.1 part by weight of tris (2,4-di-t-butylphenyl) phosphite (trade name: PHOSPHITE 168) as the organic phosphite stabilizer and 0.1 part by weight of bis(2,2,6,6-tetramethyl-4-piperidyl) sebacate (trade name: SANOL 770, a product of Sankyo Co., Ltd.) as the hindered amine stabilizer were blended with a mixture of 20 parts by weight of ultra-high-molecular-weight polyethylene (intrinsic viscosity [$\eta$] = 8.94 dl/g as measured in decalin at 135 °C) powder and 80 parts by weight of paraffin wax (melting point: 69 °C, trade name: Luvax, a product of Nippon Seiro KK) as the diluent. In the same way as in Comparative Example 1, the mixture was melt-spun and a fiber having molecular orientation was produced. Various physical properties were measured.

The results are shown in Table 5.

Example 37

The procedure of Example 36 was repeated except that 0.1 part by weight of tetrakis [methylene-3-(3,5-di-t-butyl-4-hydroxyphenyl) propionate]-methane (trade name: IRGANOX 1010, a product of Nippon Ciba-Geigy KK) as the phenol stabilizer, 0.1 part by weight of tris (2,4-di-t-butylphenyl) phosphite (trade name: PHOSPHITE 168, a product of Nippon Ciba-Geigy KK) as the organic phosphite stabilizer, 0.1 part by weight of bis(2,2,6,6-tetramethyl-4-piperidyl) sebacate (trade name: SANOL 770, a product of Sankyo Co., Ltd.) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 5.

Example 38

The procedure of Example 36 was repeated except that 0.2 parts by weight of a 50:50 mixture (trade name: IRGANOX 1425WL, a product of Nippon Ciba-Geigy KK) of bis(3,5-di-t-butyl-4-hydroxybenzylphosphonic acid ethyl ester) calcium and polyethylene wax as the phenol stabilizer, 0.1 part by weight of tris (2,4-di-t-butylphenyl) phosphite (trade name: PHOSPHITE 168, a product of Nippon Ciba-Geigy KK) as the organic phosphite stabilizer and 0.1 part by weight of dimethyl succinate-1-(2-hydroxyethyl)-4-hydroxy-2,2,6,6-tetramethylpiperidine polycondensate (trade name: Chimassorb 622LD, a product of Nippon Ciba-Geigy KK) as the hindered amine stabilizer were used to obtain a fiber having molecular orientation. The aforementioned measurements were made.

The results are shown in Table 5.

Example 39

The procedure of Example 36 was repeated except that 0.2 parts by weight of a 50:50 mixture (trade name: IRGANOX 1425WL, a product of Nippon Ciba-Geigy KK) of bis(3,5-di-t-butyl-4-hydroxybenzylphosphonic acid ethyl ester) calcium and polyethylene wax as the phenol stabilizer, 0.1 part by weight of tris (2,4-di-t-butylphenyl) phosphite (trade name: PHOSPHITE 168, a product of Nippon Ciba-Geigy KK) as the organic phosphite stabilizer, 0.1 part by weight of dimethyl succinate-1-(2-hydroxyethyl)-4-hydroxy-2,2,6,6-tetramethylpiperidine polycondensate (trade name: Chimassorb 622LD, a product of Nippon Ciba-Geigy KK) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 5.

Example 40

The procedure of Example 36 was repeated except that 0.1 part by weight of bis[3,5-bis(4-hydroxy-3-t-butylphenyl)butyric acid] glycol ester (trade mark: HOSTANOX 03, a product of Nippon Hoechst KK) as the phenol stabilizer, 0.1 part by weight of bis(2,6-di-t-butyl-4-methylphenyl)pentaerythritol diphosphite (trade name: MARK PEP36, a product of Adeka Argus KK) as the organic phosphite stabilizer and 0.1 part by weight of poly[[6-(1,1,3,3-tetramethylbutyl)imino-1,3,5-triazine-2-4-diyl][2,2,6,6-tetramethyl-4-piperidyl)imino]-hexamethylene [(2,2,6,6-tetramethyl-4-piperidyl)imino] (trade name: Chimassorb 944LD, a product of Nippon Ciba-Geigy KK) as the hindered amine stabilizer were used to obtain a fiber having molecular orientation. The aforementioned measurements were made.

The results are shown in Table 5.

Example 41

The procedure of Example 36 was repeated except that 0.1 part by weight of bis[3,5-bis(4-hydroxy-3-t-butylphenyl)butyric acid] glycol ester (trade name: HOSTANOX 03, a product of Nippon Hoechst KK) as the phenol stabilizer, 0.1 part by weight of bis(2,6-di-t-butyl-4-methylphenyl)pentaerythritol diphosphite (trade name: MARK PEP-36, a product of Adeka Argus Kagaku KK) as the organic phosphite stabilizer, 0.1 part by weight of poly[[6-(1,1,3,3-tetramethylbutyl)imino-1,3,5-triazine-2-4-diyl][2,2,6,6-tetramethyl-4-piperidyl)imino]-hexamethylene [(2,2,6,6-tetramethyl-4-piperidyl)imino]] (trade name: Chimassorb 944LD, a product of Nippon Ciba-Geigy KK) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 5.

Example 42

The procedure of Example 36 was repeated except that 0.1 part by weight of N,N'-bis[3,5-di-t-butyl-4-hydroxyphenyl)propionyl]hydrazine (trade name: IRGANOX MD1024, a product of Nippon Ciba Geigy KK) as the phenol stabilizer, 0.1 part by weight of bis(2,6-di-t-butyl-4-methylphenyl)pentaerythritol diphosphite (trade name: MARK PEP-36, a product of Adeka Argus Kagaku KK) as the organic phosphite stabilizer and 0.1 part by weight of tetrakis(2,2,6,6-tetramethyl-4-piperidyl)-1,2,3,4-butanetetracarboxylate (trade name: MARK LA-57, a product of Adeka Argus Kagaku KK) as the hindered amine stabilizer were used to obtain a fiber having molecular orientation. The aforementioned measurements were made.

The results are shown in Table 5.

Example 43

The procedure of Example 36 was repeated except that 0.1 part by weight of N,N'-bis[3,5-di-t-butyl-4-hydroxyphenyl)propionyl]hydrazine (trade name: IRGANOX MD1024, a product of Nippon Ciba-Geigy KK) as the phenol stabilizer, 0.1 part by weight of bis(2,6-di-t-butyl-4-methylphenyl)pentaerythritol diphosphite (trade name: MARK PEP-36, a product of Adeka Argus Kagaku KK) as the organic phosphite stabilizer, 0.1 part by weight of tetrakis(2,2,6,6-tetramethyl-4-piperidyl)-1,2,3,4-butanetetracarboxylate (trade name: MARK LA-57, a product of Adeka Argus Kagaku KK) as the hindered amine stabilizer and further 0.3 parts by weight of calcium strearate (a product of Sankyo Yuki KK) as the metal salt of the higher fatty acid were

used to obtain a fiber having molecular orientation. The aforementioned measurements were made.

The results are shown in Table 5.

Example 44

The procedure of Example 36 was repeated except that 0.1 part by weight of tetrakis [methylene-3-(3,5-di-t-butyl-4-hydroxyphenyl) propionate]methane (trade name: IRGANOX 1010, a product of Nippon Ciba-Geigy KK) as the phenol stabilizer, 0.1 part by weight of tetrakis (2,4-di-t-butylphenyl)-4,4'-biphenylenediphenyl phosphonite (trade name: SANDOSTAB P-EPQ, a product of Sandoz Ltd.) as the organic phosphite stabilizer and 0.1 part by weight of bis (2,2,6,6-tetramethyl-4-piperidyl) sebacate (trade name: SANOL 770, a product of Sankyo Co., Ltd.) as the hindered amine stabilizer were used to obtain a fiber having molecular orientation. The aforementioned measurements were made.

The results are shown in Table 5.

Example 45

The procedure of Example 36 was repeated except that 0.1 part by weight of tetrakis [methylene-3-(3,5-di-t-butyl-4-hydroxyphenyl) propionate]methane (trade name: IRGANOX 1010, a product of Nippon Ciba-Geigy KK) as the phenol stabilizer, 0.1 part by weight of tetrakis(2,4-di-t-butylphenyl)-4,4'-biphenylenediphenyl phosphonite (trade name: SANDOSTAB P-EPQ, a product of Sandoz Ltd.) as the organic phosphite stabilizer, 0.1 part by weight of bis (2,2,6,6-tetramethyl-4-piperidyl) sebacate (trade name: SANOL 770, a product of Sankyo Co., Ltd.) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 5. The results of Comparative Example 6 are also shown in Table 5 for the purpose of comparison.

Table 5

| Example | Intrinsic viscosity [dl/g] | Tensile modulus [GPa] | Tensile strength [GPa] | Tensile elongation [%] |
|---|---|---|---|---|
| 36 | 8.33 | 89 | 2.51 | 4.31 |
| 37 | 8.35 | 90 | 2.53 | 4.33 |
| 38 | 8.36 | 90 | 2.56 | 4.30 |
| 39 | 8.37 | 91 | 2.48 | 4.31 |
| 40 | 8.32 | 89 | 2.50 | 4.27 |
| 41 | 8.33 | 89 | 2.51 | 4.29 |
| 42 | 8.29 | 90 | 2.54 | 4.32 |
| 43 | 8.31 | 91 | 2.56 | 4.35 |
| 44 | 8.36 | 89 | 2.54 | 4.31 |
| 45 | 8.40 | 90 | 2.56 | 4.35 |
| Com. Ex. 6 | 6.54 | 85 | 2.05 | 2.15 |

It can be understood from Table 5 that the ultra-high-molecular-weight polyethylene compositions containing the above-mentioned stabilizers give fiers having molecular orientation, which scarcely cause lowering in intrinsic viscosity [$\eta$] due to molding and have good tensile characteristics.

Example 46

0.1 part by weight of tetrakis [methylene-3-(3,5-di-t-butyl-4-hydroxyphenyl) propionate]methane (trade name: IRGANOX 1010, a product of Nippon Ciba-Geigy KK) as the phenol stabilizer, 0.1 part by weight of dilauryl thiodipropionate (trade name: Antiox L, a product of Nippon Oils & Fats Co., Ltd.) as the organic thioether stabilizer and 0.1 part by weight of bis(2,2,6,6-tetramethyl-4-piperidyl) sebacate (trade name: SANOL 770, a product of Sankyo Co.,Ltd.) as the hindered amine stabilizer were blended with a mixture of 20 parts by weight of ultra-high-molecular-weight polyethylene (intrinsic viscosity [$\eta$]= 8.94 dl/g as measured in decalin at 135 °C) powder and paraffin wax (melting point: 69°C, trade name: Luvax, a

product of Nippon Seiro KK) as the diluent. In the same way as in Comparative Example 1, the mixture was subjected to melt spinning to produce a fiber having molecular orientation. Various physical properties were measured.

The results are shown in Table 6.

Example 47

The procedure of Examlpe 46 was repeated except that 0.1 part by weight of tetrakis [methylene-3-(3,5-di-t-butyl-4-hydroxyphenyl) propionate]methane (trade name: IRGANOX 1010, a product of Nippon Ciba-Geigy KK) as the phenol stabilizer, 0.1 part by weight of dilauryl thiodipropionate (trade name: Antiox L, a product of Nippon Oils & Fats Co., Ltd.) as the organic thioether stabilizer, 0.1 part by weight of bis (2,2,6,6-tetramethyl-4-piperidyl) sebacate (trade name: SANOL 770, a product of Sankyo Co., Ltd.) as the hindered amine stabilizer and further 0.3 parts by weight of calcium stearate (a product of Sankyo Yuki KK)as the metal salt of the higher fatty acid were used to obtain a fiber having molecular orientation. The aforementioned measurements were made.

The results are shown in Table 6.

Example 48

The procedure of Example 46 was repeated excpet that 0.2 parts by weight of a 50:50 mixture (trade name: IRGANOX 1425 WL, a product of Nippon Ciba-Geigy KK) of bis (3,5-di-t-butyl-4-hydroxybenzylphosphonic acid ethyl ester) calcium and polyethylene wax as the phenol stabilizer, 0.1 part distearyl thiodipropionate (trade name: DSTP(YOSHIOTOMI) a product of Yoshitomi Pharmaceutical Industries Ltd.) as the organic thioether stabilizer and 0.1 part by weight of dimethyl succinate-1-(2-hydroxyethyl)-4-hydroxy-2,2,6,6-tetramethylpiperidine polycondensate (trade name: Chimassorb 622LD, a product of Nippon Ciba-Geigy KK) as the hindered amine stabilizer were used to obtain a fiber having molecular orientation. The aforementioned measurements were made.

The results are shown in Table 6.

Example 49

The procedure of Example 46 was repeated except that 0.2 parts by weight of a 50:50 mixture (trade name: IRGANOX 1425WL, a product of Nippon Ciba-Geigy KK) of bis (3,5-di-t-butyl-4-hydroxybenzylphosphonic acid ethyl ester) calcium and polyethylene wax as the phenol stabilizer, 0.1 part by weight of distearyl thiodipropionate (trade name: DSTP(YOSHITOMI), a product of Yoshitomi Pharmaceutical Industries Ltd.) as the organic thioether stabilizer and 0.1 part by weight of dimethyl succinate-1-(2-hydroxyethyl)-4-hydroxy-2,2,6,6-tetramethylpiperidine polycondensate (trade name: Chimassorb 622LD, a product of Nippon Ciba-Geigy KK) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 6.

Example 50

The procedure of Example 46 was repeated except that 0.1 part by weight of bis [3,5-bis(4-hydroxy-3-t-butylphenyl)butyric acid] glycol ester (trade name: HOSTANOX 03, a product or Nippon Hoeschst KK) as the phenol stabilizer, 0.1 part by weight of lauryl stearyl thiodipropionate (trade name: LSTP(YOSHITOMI), a product of Yoshitomi Pharmaceutical Industries Ltd.) as the organic thioether stabilizer and 0.1 part by weight of poly[[6-(1,1,3,3-tetramethylbutyl)imino-1,3,5-triazine-2-4-diyl][(2,2,6,6-tetramethyl-4-piperidyl)-imino] hexamethylene[(2,2,6,6-tetramethyl-4-piperidyl)imino]] (trade name: Chimassorb 944LD, a product of Nippon Ciba-Geigy KK) as the hindered amine stabilizer were used to obtain a fiber having molecular orientation. The aforementioned measurements were made.

The results are shown in Table 6.

Example 51

The procedure of Example 46 was repeated except that 0.1 part by weight of bis[3,5-bis(4-hydroxy-3-t-butylphenyl)butyric acid] glycol ester (trade name: HOSTANOX 03, a product or Nippon Hoechst KK) as the

phenol stabilizer, 0.1 part by weight of lauryl stearyl thiodipropionate (trade name: LSTP [YOSHITOMI], a product of Yoshitomi Pharmaceutical Industries Ltd.) as the organic thioether stabilizer, 0.1 part by weight of poly[[6-(1,1,3,3-tetramethylbutyl)imino-1,3,5-triazine-2-4-diyl][(2,2,6,6-tetramethyl-4-piperidyl)imino]-hexamethylene [(2,2,6,6-tetramethyl-4-piperidyl)imino]] (trade name: Chimassorb 944LD, a product of Nippon Ciba-Geigy KK) as the hindered amine stabilizer and further 0.3 parts by weight of calcium stearate (a product of Sakyo Yuki KK) as the metal salt of the higher fatty acid were used to obtain a fiber having molecular orientation. The aforementioned measurements were made.

The results are shown in Table 6.

Example 52

The procedure of Example 46 was repeated except that 0.1 part by weight of N,N'-bis [3,5-di-t-butyl-4-hydroxyphenyl)propionyl]hydrazine (trade name: IRGANOX WD1024, a product or Nippon Ciba-Geigy KK) as the phenol stabilizer, 0.1 part by weight of pentaerythrityltetra-β-mercaptolauryl propionate (trade name: Seenox 412S, a product of Shipuro Kasei KK) as the organic thioether stabilizer and 0.1 part by weight of tetrakis (2,2,6,6-tetramethyl-4-piperidyl)-1,2,3,4-butanetetracarboxylate (trade name: MARK LA-57, a product of Adeka Argus Kagaku KK) as the hindered amine stabilizer were used to obtain a fiber having molecular orientation. The aforementioned measurements were made.

The results are shown in Table 6.

Example 52

The procedure of Example 46 was repeated except that 0.1 part by weight of N,N'-bis [3,5-di-t-butyl-4-hydroxyphenyl)propionyl]hydrazine (trade name: IRGANOX MD1024, a product or Nippon Ciba-Geigy KK) as the phenol stabilizer, 0.1 part by weight of pentaerythrityltetra-β-mercaptolauryl propionate (trade name: Seenox 412S, a product of Shipuro Kasei KK) as the organic thioether stabilizer, 0.1 part by weight of tetrakis (2,2,6,6-tetra-methyl-4-piperidyl)-1,2,3,4-butanetetracarboxylate (trade name: MARK LA-57, a product of Adeka Argus Kagaku KK) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 6.

Example 54

The procedure of Example 46 was repeated except that 0.1 part by weight of 2,2'-oxamidobis[ethyl-3-(3,5-di-t-butyl-4-hydroxyphenyl)propionate] (trade name: NAUGARD XL-1, a product of Uniroyal) as the phenol stabilizer, 0.1 part by weight of dimyristyl thiodipropionate (trade name: DMTP(YOSHITOMO), a product of Yoshitomo Pharmaceutical Industries Ltd.) as the organic thioether stabilizer and 0.1 part by weight of dimethyl succinate-1-(2-hydroxyethyl)-4-hydroxy-2,2,6,6-tetramethylpiperidine polycondensate (trade name:Chimassorb 622LD, a product of Nippon Ciba-Geigy KK) as the hindered amine stabilizer were used to obtain a fiber having molecular orientation. The aforementioned measurements were made.

The results are shown in Table 6.

Example 55

The procedure of Example 46 was repeated except that 0.1 part by weight of 2,2'-oxamidobis [ethyl-3-(3,5-di-t-butyl-4-hydroxyphenyl)propionate] (trade name: NAUGARD XL-1, a product of Uniroyal) as the phenol stabilizer, 0.1 part by weight of dimyristyl thiodipropionate (trade name: DMTP(YOSHITOMI), a product of Yoshitomi Pharmaceutical Industries Ltd.) as the organic thioether stabilizer, 0.1 part by weight of dimethyl succinate-1-(2-hydroxyethyl)-4-hydroxy-2,2,6,6-tetramethylpiperidine polycondensate (trade name: Chimassorb 622LD, a product of Nipppon Ciba-Geigy KK) as the hindered amine stabilizer and further 0.3 parts by weight of calcium stearate (a product of Sankyo Yuki KK) as the metal salt of the higher fatty acid were used to obtain a fiber having molecular orientation. The aforementioned measurements were made.

The results are shown in Table 6. The results of Comparative Example 6 are also shown in Table 6 for the purpose of comparison.

Table 6

| Example | Intrinsic viscosity [dl/g] | Tensile modulus [GPa] | Tensile strength [GPa] | Tensile elongation [%] |
|---|---|---|---|---|
| 46 | 8.30 | 89 | 2.49 | 4.28 |
| 47 | 8.32 | 90 | 2.51 | 4.29 |
| 48 | 8.29 | 90 | 2.50 | 4.31 |
| 49 | 8.31 | 91 | 2.52 | 4.32 |
| 50 | 8.31 | 88 | 2.47 | 4.31 |
| 51 | 8.34 | 89 | 2.50 | 4.33 |
| 52 | 8.28 | 91 | 2.51 | 4.30 |
| 53 | 8.30 | 91 | 2.53 | 4.31 |
| 54 | 8.32 | 89 | 2.49 | 4.29 |
| 55 | 8.35 | 90 | 2.51 | 4.30 |
| Com. Ex. 6 | 6.54 | 85 | 2.05 | 2.15 |

It can be understood from Table 6 that the ultra-high-molecular-weight polyolefin compositions containing the above-mentioned stabilizers give fibers having molecular orientation, which scarcely cause lowering in intrinsic viscosity [η] due to molding and have good tensile characteristics.

Example 56

0.1 part by weight of tris(2,4-di-t-butylphenyl) phosphite (trade name:PHOSPHITE 168, a product of Nippon Ciba-Geigy KK) as the organic phosphite stabilizer was blended with a mixture of 20 parts by weight of ultra-high-molecular-weight polyethylene (intrinsic viscosity [η] = 8.94 dl/g as measured in decalin at 135 °C) powder and 80 parts by weight of paraffin wax (melting point: 69 °C, trade name:Luvax, a product of Nippon Seiro KK) as the diluent. In the same way as in Comparative Example 1, a fiber having molecular orientation was produced from the resulting mixture. Various physical properties were measured as in Comparative Example 1.

The results are shown in Table 7.

Example 57

The procedure of Example 56 was repeated except that 0.1 part by weight of tris(2,4-di-t-butylphenyl) phosphite (trade name:PHOSPHITE 168, a product of Nippon Ciba-Geigy KK) as the organic phosphite stabilizer and further 0.3 parts by weight of calcium stearate (a product of Sankyo Yuki KK) as the metal salt of higher fatty acid were used to obtain a fiber having molecular orientation. The aforementioned measurements were made.

The results are shown in Table 7.

Example 58

The procedure of Example 56 was repeated except that 0.1 part by weight of bis(2,4-di-t-butylphenyl) pentaerythritoldiphosphite (trade name:ULTRANOX 626, a product of Borg Warner as the organic phosphite stabilizer was used to obtain a fiber having molecular orientation. The aforementioned measurements were made.

The results are shown in Table 7.

Example 59

The procedure of Example 56 was repeated except that 0.1 part by weight of bis(2,4-di-t-butylphenyl) pentaerythritoldiphosphite (trade name:ULTRANOX 626, a product of Borg Warner) as the organic phosphite stabilizer and further 0.3 parts by weight of calcium stearate (a product of Sankyo Yuki KK) as the metal salt of higher fatty acid were used to obtain a fiber having molecular orientation. The aforementioned measurements were made.

The results are shown in Table 7.

Example 60

The prodedure of Example 56 was repeated except that 0.1 part by weight of bis(2,4-di-t-butyl-4-methylphenyl)pentaerythritoldiphosphite (trade name:MARK PEP-36, a product of Adeka Argus Kagaku KK) as the organic phosphite stabilizer was used to obtain a fiber having molecular orientation. The aforementioned measurements were made.

The results are shown in Table 7.

Example 61

The procedure of Example 56 was repeated except that 0.1 part by weight of bis(2,4-di-t-butyl-4-methylphenyl) pentaerythritoldiphosphite (trade name: MARK PEP-36, a product of Adeka Argus Kagaku KK) as the organic phosphite stabilizer and further 0.3 parts by weight of calcium stearate (a product of Sankyo Yuki KK) as the metal salt of higher fatty acid were used to obtain a fiber having molecular orientation. The aforementioned measurements were made.

The results are shown in Table 7.

Example 62

The procedure of Example 56 was repeated except that 0.1 part by weight of trisnonylphenylphosphite (trade name: MARK 329, a product of Adeka Argus Kagaku KK) as the organic phosphite stabilizer was used to obtain a fiber having molecular orientation. The aforementioned measurements were made.

The results are shown in Table 7.

Example 63

The procedure of Example 56 was repeated except that 0.1 part by weight of trisnonylphenylphosphite (trade name: MARK 329, a product of Adeka Argus Kagaku KK) as the organic phosphite stabilizer and further 0.3 parts by weight of calcium stearate (a product of Sankyo Yuki KK) as the metal salt of higher fatty acid were used to obtain a fiber having molecular orientation. The aforementioned measurements were made.

The results are shown in Table 7.

Example 64

The procedure of Example 56 was repeated except that 0.1 part by weight of tetrakis(2,4-di-t-butylphenyl)4,4'-biphenylenephosphonite (trade name:SANDSTAB P-EPQ, a product of SANDOZ as the organic phosphite stabilizer was used to obtain a fiber having molecular orientation. The aforementioned measurements were made.

The results are shown in Table 7.

Example 65

The procedure of Example 56 was repeated except that 0.1 part by weight of tetrakis (2,4-di-butylphenyl) 4,4'-biphenylenephosphonite (trade name: SANDOSTAB P-EPQ; a product of SANDOZ as the organic phosphite stabilizer and further 0.3 parts by weight of calcium stearate (a product of Sankyo Yuki KK) as the metal salt of higher fatty acid were used to obtain a fiber having molecular orientation. The aforementioned measurements were made.

The results are shown in Table 7. The test results of Comparative Example 6 are also shown in Table 2 for the purpose of comparison.

Table 7

| Example | Intrinsic viscosity [dl/g] | Tensile modulus [GPa] | Tensile strength [GPa] | Tensile elongation [%] |
|---|---|---|---|---|
| 56 | 8.10 | 90 | 2.49 | 4.30 |
| 57 | 8.13 | 88 | 2.51 | 4.32 |
| 58 | 8.09 | 89 | 2.47 | 4.35 |
| 59 | 8.12 | 90 | 2.48 | 4.37 |
| 60 | 8.10 | 92 | 2.50 | 4.29 |
| 61 | 8.11 | 91 | 2.52 | 4.32 |
| 62 | 8.10 | 91 | 2.46 | 4.28 |
| 63 | 8.13 | 90 | 2.49 | 4.32 |
| 64 | 8.12 | 92 | 2.48 | 4.33 |
| 65 | 8.15 | 91 | 2.50 | 4.35 |
| Com. Ex. 6 | 6.54 | 85 | 2.05 | 2.15 |

It can be understood from Table 7 that the ultra-high-molecular-weight polyethylene compositions containing the above-mentioned stabilizers give fibers having molecular orientation, which scarcely cause lowering in intrinsic viscosity [$\eta$] due to molding and have good tensile characteristics.

Example 66

0.1 part by weight of bis (2,2,6,6-tetramethyl-4-piperidyl) sebacate (trade name: SANOL 770, a product of Sankyo Co., Ltd.) as the hindered amine stabilizer was blended with a mixture of 20 parts by weight of ultra-high-molecular-weight polyethylene (intrinsic viscosity [$\eta$] = 8.94 dl/g as measured in decalin at 135 °C) powder and 80 parts by weight of paraffin wax (melting point: 69 °C, trade name:Luvax, a product of Nippon Seiro KK) as the diluent. In the same way as in Comparative Example 1, a fiber having molecular orientation was produced from the resulting mixture. Various physical properties were measured as in Comparative Example 1.

The results are shown in Table 8.

Example 67

The procedure of example 66 was repeated except that 0.1 part by weight of bis (2,2,6,6-tetramethyl-4-piperidyl) sebacate (trade name: SANOL 770, a product of Sankyo Co., Ltd.) as the hindered amine stabilizer and further 0.3 parts by weight of calcium stearate (a product of Sankyo Yuki KK) as the metal salt of higher fatty acid were used to obtain a fiber having molecular orientation. The aforementioned measurements were made.

The results are shown in Table 8.

Example 68

The procedure of Example 67 was repeated except that 0.1 part by weight of dimethyl succinate-1-(2-hydroxyethyl)-4-hydroxy-2,2,6,6-tetramethylpiperidine polycondensate (trade name: Chimassorb 622LD, a product of Nippon Ciba-Geigh KK) as the hindered amine stabilizer was used to obtain a fiber having molecular orientation. The aforementioned measurements were made.

The results are shown in Table 8.

Example 69

The procedure of Example 67 was repeated except that 0.1 part by weight of dimethyl succinate-1-(2-hydroxyethyl)-4-hydroxy-2,2,6,6-tetramethylpiperidine polycondensate (trade name: Chimassorb 622LD, a product of Nippon Ciba-Geigy KK) as the hindered amine stabilizer and further 0.3 parts by weight of calcium stearate (a product of Sankyo Yuki KK) as the metal salt of higher fatty acid were used to obtain a fiber having molecular orientation. The aforementioned measurements were made.

The results are shown in Table 8.

Example 70

The procedure of Example 66 was repeated except that 0.1 part by weight of poly[[6-(1,1,3,3-tetramethylbutyl)imino-1,3,5-triazine-2-4-diyl][(2,2,6,6-tetramethyl-4-piperidyl)imino]hexamethylene [(2,2,6,6-tetramethyl-4-piperidyl)imino]] (trade name: Chimassorb 944LD, a product of Nippon Ciba-Geigy KK) as the hindered amine stabilizer was used to obtain a fiber having molecular orientation. The aforementioned measurements were made.

The results are shown in Table 8.

Example 71

The procedure of Example 66 was repeated except that 0.1 part by weight of poly[[6-(1,1,3,3-tetramethylbutyl)imino-1,3,5-triazine-2-4-diyl][(2,2,6,6-tetramethyl-4-piperidyl)imino]hexamethylene [(2,2,6,6-tetramethyl-4-piperidyl)imino]] (trade name: Chimassorb 944LD, a product of Nippon Ciba-Geigy KK) as the hindered amine stabilizer and further 0.3 parts by weight of calcium stearate (a product of Sankyo Yuki KK) as the metal salt of higher fatty acid were used to obtain a fiber having molecular orientation. The aforementioned measurements were made.

The results are shown in Table 8.

Example 72

The procedure of Example 67 was repeated except that 0.1 part by weight of tetrakis (2,2,6,6-tetramethyl-4-piperidyl)-1,2,3,4-butanetetracarboxylate (trade name: MARK LA-57, a product of Adeka Argus Kagaku KK) as the hindered amine stabilizer was used to obtain a fiber having molecular orientation. The aforementioned measurements were made.

The results are shown in Table 8.

Example 73

The procedure of Example 67 was repeated except that 0.1 part by weight of tetrakis (2,2,6,6-tetramethyl-4-piperidyl)-1,2,3,4-butanetetracarboxylate (trade name: MARK LA-57, a product of Adeka Argus Kagaku KK) as the hindered amine stabilizer and further 0.3 parts by weight of calcium stearate (a product of Sankyo Yuki KK) as the metal salt of higher fatty acid were used to obtain a fiber having molecular orientation. The aforementioned measurements were made.

The results are shown in Table 8. The test results of Comparative Example 6 are also shown in Table 8 for the purpose of comparison.

Table 8

| Example | Intrinsic viscosity [dl/g] | Tensile modulus [GPa] | Tensile strength [GPa] | Tensile elongation [%] |
|---|---|---|---|---|
| 66 | 7.89 | 88 | 2.41 | 4.43 |
| 67 | 7.95 | 89 | 2.43 | 4.15 |
| 68 | 7.83 | 89 | 2.45 | 4.18 |
| 69 | 7.86 | 90 | 2.46 | 4.21 |
| 70 | 7.84 | 87 | 2.38 | 4.10 |
| 71 | 7.88 | 88 | 2.41 | 4.12 |
| 72 | 7.72 | 88 | 2.45 | 4.15 |
| 73 | 7.85 | 89 | 2.46 | 4.18 |
| Com. Ex. 6 | 6.54 | 85 | 2.05 | 2.15 |

It can be understood from Table 8 that the ultra-high-molecular-weight polyethylene compositions containing the above-mentioned stabilizers give fibers having molecular orientation, which scarcely cause lowering in intrinsic viscosity [$\eta$] due to molding and have good tensile characteristics.

Example 74

0.1 part by weight of tris(2,4-di-t-butylphenyl) phosphite (trade name:PHOSPHITE 168, a product of Nippon Ciba-Geigy KK) as the organic phosphite stabilizer and 0.1 part by weight of bis(2,2,6,6-tetramethyl-4-piperidyl) sebacate (trade name:SANOL 770, a product of Sankyo Co., Ltd.) were blended with a mixture of 20 parts by weight of ultra-high-molecular weight polyethylene (having an intrinsic viscosity [$\eta$] of 8.94 dl/g as measured in decalin solvent at 135 °C) powder and 80 parts by weight of paraffin wax (melting point: 69 °C, trade name: Luvax, a product of Nippon Seiro KK) as the diluent. The resulting mixture was melt-spun under the following conditions.

The mixture was fed to a screw extruder (screw diameter: 25 mm, L/D = 25, manufactured by Thermoplastic KK) and melt-kneaded at a temperature of 190 °C. The melt-kneaded material was melt-spun through a spining die having an orifice diameter of 2 mm, said die being fixed to said extruder. The extruder was then taken off under such conditions that air gap was 180 cm and a draft ratio was 35. The extrudate was cooled in air to solidify it, thus obtaining an unoriented fiber.

The unoriented fiber was under the following conditions to obtain a fiber having molecular orientation.

Three pairs of godet rolls were used and two-stage orientation was carried out. The heat transfer medium of the first orientation tank was n-decane and the temperature thereof was 110 °C, and that of the second orientation tank was triethylene glycol and the temperature thereof was 145 °C. The effective length of each tank was 50 cm. In carrying out orientation, the revolution speed of the first godet rolls was 0.5/min and that of the third godet rolls was 12.5/min (draw ratio: 25). The revolution speed of the second godet rolls was carefully chosen so that safety driving could be made. Almost all of the paraffin wax initially mixed with the ultra-high-molecular-weight polyethylene was extracted into n-decane during the course of orientation.

The resulting fiber having molecular orientation was washed with water and dried at room temperature under reduced pressure overnight and the intrinsic viscosity [$\eta$] and tensile characteristics thereof were determined. The measurements were made in the following manners.

Intrinsic viscosity [$\eta$]: Intrinsic viscosity of the resin constituting the fiber having molecular orientation as measured in decalin solvent at 135 °C.

Tensile characteristics: Modulus and tensile strength as tensile characteristics were measured at room temperature (23 °C) by using DCS-50M type tensile testing machine manufactured by Shimazu Seisakusho Ltd. The length of the test sample between clamps was 100 mm and the rate of pulling was 100 mm/min (100% partial strain rate). The modulus was initial modulus and calculated by using the gradient of tangent line. The sectional area of the fiber required for the calculation was determined from its weight and its density which was referred to as 0.960 g/cc.

The results are shown in Table 9.

Example 75

The procedure of Example 74 was repeated except that 0.1 part by weight of tris(2,4-di-t-butylphenyl) phosphite (trade name:PHOSPHITE 168, a product of Nippon Ciba-Geigy KK) as the organic phosphite stabilizer, and 0.1 part by weight of bis(2,2,6,6-tetramethyl-4-piperidyl) sebacate (trade name: SANOL 770, a product of Sankyo Co., Ltd.) as the hindered amine stabilizer and further 0.3 parts by weight of calcium stearate (a product of Sankyo Yuki KK) were used to obtain a fiber having molecular orientation. The aforementioned measurements were made.

The results are shown in Table 9.

Example 76

The procedure of Example 74 was repeated except that 0.1 part by weight of tris(2,4-di-t-butylphenyl) phosphite (trade name:PHOSPHITE 168, a product of Nippon Ciba-Geigy KK) as the organic phosphite stabilizer, and 0.1 part by weight of dimethyl succinate-1-(2-hydroxyethyl)-4-hydroxy-2,2,6,6-tetramethylpiperidine polycondensate (trade name:Chimassorb 622LD, manufactured by Nippon Ciba-Geigy KK) as the hindered amine stabilizer were used to obtain a fiber having molecular orientation. The aforementioned measurements were made.

The results are shown in Table 9.

Example 77

The procedure of Example 74 was repeated except that 0.1 part by weight of tris(2,4-di-t-butylphenyl) phosphite (trade name:PHOSPHITE 168, a product of Nippon Ciba-Geigy KK) as the organic phosphite stabilizer, 0.1 part by weight of dimethyl succinate-1-(2-hydroxyethyl)-4-hydroxy-2,2,6,6-tetramethyl-piperidine polycondensate (trade name:Chimassorb 622LD, manufactured by Nippon Ciba-Geigy KK) as the hindered amine stabilizer and further 0.3 parts by weight of calcium stearate (a product of Sankyo Yuki KK) were used to obtain a fiber having molecular orientation. The aforementioned measurements were made.

The results are shown in Table 9.

Example 78

The procedure of Example 74 was repeated except that 0.1 part by weight of bis(2,6-di-t-butyl-4-methylphenyl)pentaerythritol diphosphite(trade name:MARK PEP-36, a product of Adeka Argus Kagaku KK) as the organic phosphite stabilizer and 0.1 part by weight of poly[[6-(1,1,3,3-tetramethylbutyl) imino-1,3,5-triazine-2-4-diyl][2,2,6,6-tetramethyl-4-piperidyl)imino]hexamethylene[(2,2,6,6-tetramethyl-4-piperidyl)imino] (trade name:Chimassorb 944LD, a product of Nippon Ciba-Geigy KK) as the hindered amine stabilizer were used to obtain a fiber having molecular orientation. The aforementioned measurements were made.

The results are shown in Table 9.

Example 79

The procedure of Example 74 was repeated except that 0.1 part by weight of bis(2,6-di-t-butyl-4-methylphenyl)pentaerythritol diphosphite(trade name:MARK PEP-36, a product of Adeka Argus Kagaku KK) as the organic phosphite stabilizer, 0.1 part by weight of poly[[6-(1,1,3,3-tetramethylbutyl)imino-1,3,5-triazine-2-4-diyl][2,2,6,6-tetramethyl-4-piperidyl)imino]hexamethylene[(2,2,6,6-tetramethyl-4-piperidyl)imino] (trade name:Chimassorb 944LD, a product of Nippon Ciba-Geigy KK) as the hindered amine stabilizer and further 0.3 parts by weight of calcium stearate (a product of Sankyo Yuki KK) were used to obtain a fiber having molecular orientation. The aforementioned measurements were made.

The results are shown in Table 9.

Example 80

The procedure of Example 74 was repeated except that 0.1 part by weight of bis (2,6-di-t-butyl-4-methylphenyl)pentaerythritol diphosphite (trade name:MARK PEP-36, a product of Adeka Argus Kagaku KK) as the organic phosphite stabilizer and 0.1 part by weight of tetrakis(2,2,6,6,-tetramethyl-4-piperidyl)-1,2,3,4-butanetetracarboxylate(trade name:MARK LA-57, a product of Adeka Argus Kagaku KK) were used to obtain a fiber having molecular orientation. The aforementioned measurements were made.

The results are shown in Table 9.

Example 81

The procedure of Example 74 was repeated except that 0.1 part by weight of bis (2,6-di-t-butyl-4-methylphenyl)pentaerythritol diphosphite (trade name:MARK PEP-36, a product of Adeka Argus Kagaku KK) as the organic phosphite stabilizer and 0.1 part by weight of tetrakis(2,2,6,6,-tetramethyl-4-piperidyl)-1,2,3,4-butanetetracarboxylate(trade name:MARK LA-57, a product of Adeka Argus Kagaku KK) and further 0.3 parts by weight of calcium stearate (a product of Sankyo Yuki KK) were used to obtain a fiber having molecular orientation. The aforementioned measurements were made.

The results are shown in Table 9.

Example 82

The procedure of Example 74 was repeated except that 0.1 part by weight of tetrakis(2,4-di-t-butylphenyl) 4,4'-biphenylenephosphonite (trade name:SANDSTAB P-EPQ, a product of SANDOZ) as the organic phosphite stabilizer and 0.1 part by weight of bis(2,2,6,6-tetramethyl-4-piperidyl) sebacate (trade name: SANOL 770, a product of Sankyo Co., Ltd.) as the hindered amine stabilizer were used to obtain a fiber having molecular orientation. The aforementioned measurements were made.

The results are shown in Table 9.

Example 83

The procedure of Example 74 was repeated except that 0.1 part by weight of tetrakis(2,4-di-t-butylphenyl) 4,4'-biphenylenephosphonite (trade name:SANDSTAB P-EPQ, a product of SANDOZ) as the organic phosphite stabilizer 0.1 part by weight of bis(2,2,6,6-tetramethyl-4-piperidyl) sebacate (trade name: SANOL 770, a product of Sankyo Co., Ltd.) as the hindered amine stabilizer and further 0.3 parts by weight of calcium stearate (a product of Sankyo Yuki KK) were used to obtain a fiber having molecular orientation. The aforementioned measurements were made.

The results are shown in Table 9. The test results of Comparative Example 6 are also shown in Table 8 for the purpose of comparison.

Table 9

| Example | Intrinsic viscosity [dl/g] | Tensile modulus [GPa] | Tensile strength [GPa] | Tensile elongation [%] |
|---|---|---|---|---|
| 74 | 8.17 | 89 | 2.46 | 4.20 |
| 75 | 8.19 | 90 | 2.48 | 4.25 |
| 76 | 8.19 | 90 | 2.49 | 4.23 |
| 77 | 8.21 | 89 | 2.50 | 4.25 |
| 78 | 8.22 | 91 | 2.49 | 4.28 |
| 79 | 8.25 | 90 | 2.51 | 4.31 |
| 80 | 8.23 | 89 | 2.50 | 4.30 |
| 81 | 8.27 | 91 | 2.51 | 4.31 |
| 82 | 8.24 | 90 | 2.49 | 4.28 |
| 83 | 8.28 | 89 | 2.51 | 4.32 |
| Com. Ex. 6 | 6.54 | 85 | 2.05 | 2.15 |

## Claims

**1.** A composition comprising

3 to 80% by weight of an ultra-high-molecular-weight polyolefin having an intrinsic viscosity [$\eta$] of 5 to 40 dl/g as measured in decalin at 135°C;

97 to 20% by weight of a diluent, the weight percentages of ultra-high-molecular-weight polyolefin and diluent being based on their total weight; and

0.005 to 5 parts by weight of a phenol stabilizer based on 100 parts by weight of the total weight of the ultra-high-molecular-weight polyolefin and the diluent; and

0.005 to 5 parts by weight, based on 100 parts by weight of the total weight of the ultra-high-molecular-weight polyolefin and the diluent, of at least one compound selected from an organic phosphite stabilizer, an organic thioether stabilizer, a hindered amine stabilizer and a metal salt of a higher fatty acid.

**2.** A composition comprising

3 to 80% by weight of an ultra-high-molecular-weight polyolefin having an intrinsic viscosity [$\eta$] of 5 to 40 dl/g as measured in decalin at 135°C;

97 to 20% by weight of a diluent, the weight percentages of ultra-high-molecular-weight polyolefin and diluent being based on their total weight; and

0.005 to 5 parts by weight, based on 100 parts by weight of the total amount of the ultra-high-molecular-weight polyolefin and the diluent, of at least one compound selected from an organic phosphite stabilizer and a hindered amine stabilizer.

**3.** A composition according to claim 2 containing a 2,6-dimethylpiperidyl group which also comprises 0.005 to 5 parts by weight of a metal salt of a higher fatty acid based on 100 parts by weight of the total weight of the ultra-high-molecular-weight polyolefin and the diluent.

4. A composition according to any one of the preceding claims wherein the ultra-high-molecular-weight polyolefin is ultra-high-molecular-weight polyethylene.

5. A composition according to any one of the preceding claims wherein the diluent is paraffin wax.

6. A composition according to any one of the preceding claims wherein the amount of ultra-high-molecular-weight polyolefin is 15 to 60% by weight, and the amount of diluent is 85 to 40% by weight.

7. Molded articles of a composition as claimed in any one of the preceding claims.

**Patentansprüche**

1. Zusammensetzung, umfassend
3 bis 80 Gew.% eines ultra-hochmolekularen Polyolefins das eine Grenzviskosität ($\eta$) von 5 bis 40 dl/g, gemessen in Dekalin bei 135 °C hat;
97 bis 20 Gew.% eines Verdünnungsmittels, wobei die Gew.% von ultra-hochmolekularem Polyolefin und Verdünnungsmittel auf ihr Gesamtgewicht bezogen sind, und
0.005 bis 5 Gewichtsteile eines Phenol Stabilisierungsmittels, bezogen auf 100 Gewichtsteile des Gesamtgewichtes des ultra-hochmolekularen Polyolefins und des Verdünnungsmittels, und
0.005 bis 5 Gewichtsteile, bezogen auf 100 Gewichtsteile des Gesamtgewichtes des ultra-hochmolekularen Polyolefins und des Verdünnungsmittels, mindestens einer Verbindung die ausgewählt ist von einem organischen Phosphit Stabilisierungsmittel, einem organischen Thioether Stabilisierungsmittel, einem gehinderten Amin Stabilisierungsmittel und einem Metallsalz einer höheren Fettsäure.

2. Zusammensetzung, umfassend
3 bis 80 Gew.% eines ultra-hochmolekularen Polyolefins das eine Grenzviskosität ($\eta$) von 5 bis 40 dl/g, gemessen in Dekalin bei 135 °C hat;
97 bis 20 Gew.% eines Verdünnungsmittels, wobei die Gew.% des ultra-hochmolekularen Polyolefins und Verdünnungsmittels auf ihr Gesamtgewicht bezogen sind; und
0.005 bis 5 Gewichtsteile, bezogen auf 100 Gewichtsteile der Gesamtmenge des ultra-hochmolekularen Polyolefins und des Verdünnungsmittels, mindestens einer Verbindung, die ausgewählt ist, aus einem organischen Phosphit Stabilisierungsmittel und einem gehinderten Amin Stabilisierungsmittel.

3. Zusammensetzung gemäss Anspruch 2, enthaltend eine 2,6-Dimethylpiperidylgruppe, welche auch umfasst 0.005 bis 5 Gewichtsteile eines Metallsalzes einer höheren Fettsäure, bezogen auf 100 Gewichsteile des Gesamtgewichtes des ultra-hochmolekularem Polyolefins und des Verdünnungsmittels.

4. Zusammensetzung nach einem der vorhergehenden Ansprüche, worin das ultra-hochmolekulare Polyolefin, ultra-hochmolekulares Polyethylen ist.

5. Zusammensetzung nach einem der vorhergehenden Ansprüche, worin das Verdünnungsmittel Paraffinwachs ist.

6. Zusammensetzung nach einem der vorhergehenden Ansprüche, worin die Menge des ultra-hochmolekularen Polyolefins 15 bis 60 Gew.% ist, und die Menge des Verdünnungsmittels 85 bis 40 Gew.% ist.

7. Formkörper aus einer Zusammensetzung, wie sie in einem der vorhergehenden Ansprüche beansprucht ist.

**Revendications**

1. Composition comprenant :
3 à 80% en poids d'une polyoléfine à ultra-haut poids moléculaire ayant une viscosité intrinsèque dans la décaline à 135 °C [$\eta$] de 5 à 40 dl/g;
97 à 20% en poids d'un diluant, les pourcentages en poids de la polyoléfine à ultra-haut poids moléculaire et du diluant étant déterminé par rapport à leur poids total;
0,005 à 5 parties en poids d'un stabilisant phénolique sur la base de 100 parties en poids du poids

total de la polyoléfine à ultra-haut poids moléculaire et du diluant; et

0,005 à 5 parties en poids, basées sur 100 parties en poids du poids total de la polyoléfine à ultra-haut poids moléculaire et du diluant, d'au moins un composé choisi parmi un stabilisant de type phosphite organique, thioéther organique ou amine stériquement encombrée, et un sel métallique d'un acide gras supérieur.

**2.** Composition comprenant :

3 à 80% en poids d'une polyoléfine à ultra-haut poids moléculaire ayant une viscosité intrinsèque dans la décaline à 135 °C [$\eta$] de 5 à 40 dl/g;

97 à 20% en poids d'un diluant, les pourcentages en poids de la polyoléfine à ultra-haut poids moléculaire et du diluant étant déterminés par rapport à leur poids total; et

0,005 à 5 parties en poids, sur la base de 100 parties en poids du poids total de la polyoléfine à ultra-haut poids moléculaire et du diluant, d'au moins un composé choisi parmi un stabilisant de type phosphite organique et un stabilisant de type amine stériquement encombrée contenant un groupement 2,6-diméthylpipéridyle.

**3.** Composition selon la revendication 2, comprenant également 0,005 à 5 parties en poids d'un sel métallique d'un acide gras supérieur sur la base de 100 parties en poids du poids total de la polyoléfine à ultra haut poids moléculaire et du diluant.

**4.** Composition selon l'une quelconque des revendications précédentes, caractérisée en ce que la polyoléfine à ultra-haut poids moléculaire est un polyéthylène à ultra-haut poids moléculaire.

**5.** Composition selon l'une quelconque des revendications précédentes, caractérisée en ce que le diluant est une cire de paraffine.

**6.** Composition selon l'une quelconque des revendications précédentes, caractérisée en ce que la quantité de polyoléfine à ultra-haut poids moléculaire est 15 à 60% en poids, et la quantité de diluant est de 85 à 40% en poids.

**7.** Article moulé à base d'une composition telle que revendiquée dans l'une quelconque des revendications précédentes.